(19) Europäisches Patentamt
European Patent Office
Office européen des brevets

(11) **EP 3 382 496 A1**

(12) **EUROPEAN PATENT APPLICATION**
published in accordance with Art. 153(4) EPC

(43) Date of publication:
**03.10.2018 Bulletin 2018/40**

(51) Int Cl.:
**G06F 1/16** *(2006.01)*

(21) Application number: **16871063.0**

(22) Date of filing: **01.12.2016**

(86) International application number:
**PCT/KR2016/014069**

(87) International publication number:
**WO 2017/095167 (08.06.2017 Gazette 2017/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.12.2015 KR 20150170063**

(71) Applicant: **Samsung Electronics Co., Ltd.**
**Suwon-si, Gyeonggi-do 16677 (KR)**

(72) Inventors:
• **AHN, Sung-Ho**
**Seoul 06300 (KR)**
• **WOO, Sung-Gwan**
**Hwaseong-si**
**Gyeonggi-do 18445 (KR)**

(74) Representative: **HGF Limited**
**Saviour House**
**9 St. Saviourgate**
**York YO1 8NQ (GB)**

(54) **ELECTRONIC DEVICE COMPRISING CURVED DISPLAY**

(57) An electronic device according to various embodiments of the present invention may comprise: a display extending from a first direction to a second direction with respect to the electronic device and having a non-display area at the end of the second direction; a window extending from the first direction to the second direction to substantially cover at least a portion of the display; and a housing joined with the window to form at least a portion of an external surface of the electronic device, corresponding to the second direction with the window, and to cover the entire non-display area in the second direction. In addition, the electronic device may be variously implemented according to the embodiments.

FIG.1

EP 3 382 496 A1

## Description

[Technical Field]

Various embodiments disclosed herein relate to an electronic device, and in particular, to an electronic device including, for example, a curved display.

[Background Art]

An electronic device may include a flexible display that displays a screen. The flexible display may include a touch screen that incorporates input detection means such as a touch panel into display means such as a liquid crystal display so as to implement input by recognizing touches or the like on a portion displayed on a screen without using a mechanical key pad.

Briefly, the structure of the flexible display includes a touch panel on which a touch is implemented and which is capable of exposing a screen, a display panel, and a window panel on the upper side, and the panels are stacked.

[Detailed Description of the Invention]

[Technical Problem]

A display having a flat display region and a display in which at least a part of the display region is curved so that a screen region extends to a side portion have a non-display region, which is provided with an opaque layer such that connection members such as signal transmission lines and circuit board portions of a touch panel are not exposed toward an end thereof, and the non-display region is exposed to the outside.

Due to the exposure of the non-display region, there is a limitation in increasing the size of the display region of the display. In addition, due to being exposed to a user, the non-display region may deteriorate the diversity in design of the electronic device and the quality of a design may be degraded.

Further, when the exposure of the non-display region is restricted by disposing the non-display region portion inside the housing of the electronic device by implementing the display using a flexible material, assembly of the flexible display with the housing is not easy due to deformation of the end portion of the flexible display, which may increase a defective fraction.

In addition, when the peripheral portion of the display region is bent to extend to at least one side portion of the display region, the panels stacked on the display, for example, a touch panel, a display panel, a polarizing panel, etc. may have, in at least one peripheral portion, a curvature, which may be generated due to the bending. The panels may be bonded to each other through a bonding process for bonding a panel to another panel, for example, a lamination process. When panels of a flexible display, each of which has a flat region and a bent region, are laminated, restoration elasticity may occur in the bent region. Thus, in the case of a panel including a material having high restoration elasticity, peeling-off may be caused in the bent region due to the strong restoration elasticity of the bent region, which may increase the defective fraction of the flexible display.

Therefore, according to various embodiments, it is intended to provide an electronic device in which a non-display region located around a display region in a display is hindered from being exposed to the outside and thus from being visually recognized.

According to various embodiments, it is intended to provide an electronic device, in which, when a display is configured with a flexible material, a non-display region provided at an end of a bent region of the display is not exposed to the outside and an end of the flexible display is easily assembled in the process in which the housing is assembled.

[Technical Solution]

According to various embodiments, an electronic device may include:
a display extending from a first direction to a second direction with respect to the electronic device and having a non-display region formed at an end of the display in the second direction; a window extending from the first direction to the second direction so as to cover at least a portion of the display; and a housing joined with the window so as to form at least a portion of an outer face of the electronic device corresponding to the second direction together with the window and to cover the entire non-display region in the second direction.

In addition, according to various embodiments, an electronic device may include:
a display curved from a first direction with respect to the electronic device to extend in a second direction with respect to the electronic device, and having a non-display region formed at an end of the display in the second direction; a window curved from the first direction to extend in the second direction so as to cover at least a portion of the display; and a housing joined with a side of the window so as to form at least a portion of an outer face corresponding to the second direction together with the window and to cover the entire non-display region in the second direction.

[Advantageous Effects]

With the electronic device according to various embodiments, it is possible to maintain at least a part of the non-display region of the display in the state of being introduced into the inside of the housing, so that the non-display region of the display may not be exposed to the outside. Accordingly, with the electronic device according to various embodiments, it is possible to enlarge the screen size of the display and to implement of a high-quality design by limiting the exposure of the non-display region in the flexible display.

[Brief Description of Drawings]

The above and other aspects, features and advantages of the present disclosure will be more apparent from the following detailed description taken in conjunction with the accompanying drawings, in which:

FIG. 1 is a view illustrating an electronic device within a network environment in various embodiments;
FIG. 2 is a block diagram of an electronic device according to various embodiments;
FIG. 3 is a block diagram illustrating a program module according to various embodiments;
FIGS. 4A to 4C are perspective views of an electronic device according to various embodiments;
FIG. 5A is a cross-sectional view of an electronic device according to various embodiments;
FIG. 5B is a cross-sectional view of an electronic device according to various embodiments;
FIG. 6 is a cross-sectional view of an electronic device according to various embodiments;
FIG. 7 is a cross-sectional view of an electronic device according to various embodiments;
FIG. 8 is a cross-sectional view of a display and a window according to another embodiment in an electronic device according to various embodiments;
FIG. 9 is a cross-sectional view of a display and a window according to another embodiment in an electronic device according to various embodiments;
FIG. 10 is a cross-sectional view of an electronic device according to various embodiments;
FIG. 11 is a perspective view of an electronic device according to various embodiments;
FIGS. 12A to 12D are cross-sectional views of an electronic device according to various embodiments;
FIG. 13 is a cross-sectional view of an electronic device according to various embodiments;
FIG. 14 is a cross-sectional view of an electronic device according to various embodiments; and
FIG. 15 is an assembly flowchart of an electronic device according to various embodiments.

\*Description of Reference Numerals [32]
10: electronic device     11: display
12: window     13: housing
14: bracket

[Mode for Carrying out the Invention]

Hereinafter, various embodiments of the present disclosure will be described with reference to the accompanying drawings. However, it should be understood that there is no intent to limit the present disclosure to the particular forms disclosed herein; rather, the present disclosure should be construed to cover various modifications, equivalents, and/or alternatives of embodiments of the present disclosure. In describing the drawings, similar reference numerals may be used to designate similar constituent elements.

As used herein, the expression "have", "may have", "include", or "may include" refers to the existence of a corresponding feature (e.g., numeral, function, operation, or constituent element such as component), and does not exclude one or more additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposer between them. In contrast, it may be understood that when an element (e.g., first element) is referred to as being "directly connected," or "directly coupled" to another element (second element), there are no element (e.g., third element) interposed between them.

The expression "configured to" used in the present disclosure may be exchanged with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g. embedded processor) only for performing the corresponding operations or a generic-purpose processor (e.g., Central Processing Unit (CPU) or Application Processor (AP)) that can perform the corresponding operations by executing one or more software programs stored in a memory device.

The terms used in the present disclosure are only used to describe specific embodiments, and are not intended to limit the present disclosure. A singular expression may include a plural expression unless they are definitely different in a context. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even the term defined in the present disclosure should not be interpreted to exclude embodiments of the present disclosure.

An electronic device according to various embodiments of the present disclosure may include at least one of, for example, a smart phone, a tablet Personal Computer (PC), a mobile phone, a video phone, an electronic book reader (e-book reader), a desktop PC, a laptop PC, a netbook computer, a workstation, a server, a Personal Digital Assistant (PDA), a Portable Multimedia Player (PMP), a MPEG-1 audio layer-3 (MP3) player, a mobile medical device, a camera, and a wearable device. According to various embodiments, the wearable device may include at least one of an accessory type (e.g., a watch, a ring, a bracelet, an anklet, a necklace, a glasses, a contact lens, or a Head-Mounted Device (HMD)), a fabric or clothing integrated type (e.g., an electronic clothing), a body-mounted type (e.g., a skin pad, or tattoo), and a bio-implantable type (e.g., an implantable circuit).

According to some embodiments, the electronic device may be a home appliance. The home appliance may include at least one of, for example, a television, a Digital Video Disk (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™, or Google TV™), a game console (e.g., Xbox™ and PlayStation™), an electronic dictionary, an electronic key, a camcorder, and an electronic photo frame.

According to another embodiment, the electronic device may include at least one of various medical devices (e.g., various portable medical measuring devices (a blood glucose monitoring device, a heart rate monitoring device, a blood pressure measuring device, a body temperature measuring device, etc.), a Magnetic Resonance Angiography (MRA), a Magnetic Resonance Imaging (MRI), a Computed Tomography (CT) machine, and an ultrasonic machine), a navigation device, a Global Positioning System (GPS) receiver, an Event Data Recorder (EDR), a Flight Data Recorder (FDR), a Vehicle Infotainment Devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments, the electronic device may include at least one of a part of furniture or a building/structure, an electronic board, an electronic signature receiving device, a projector, and various kinds of measuring instruments (e.g., a water meter, an electric meter, a gas meter, and a radio wave meter). The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology.

Hereinafter, an electronic device according to various embodiments will be described with reference to the accompanying drawings. In the present disclosure, the term "user" may indicate a person using an electronic device or a device (e.g., an artificial intelligence electronic device) using an electronic device.

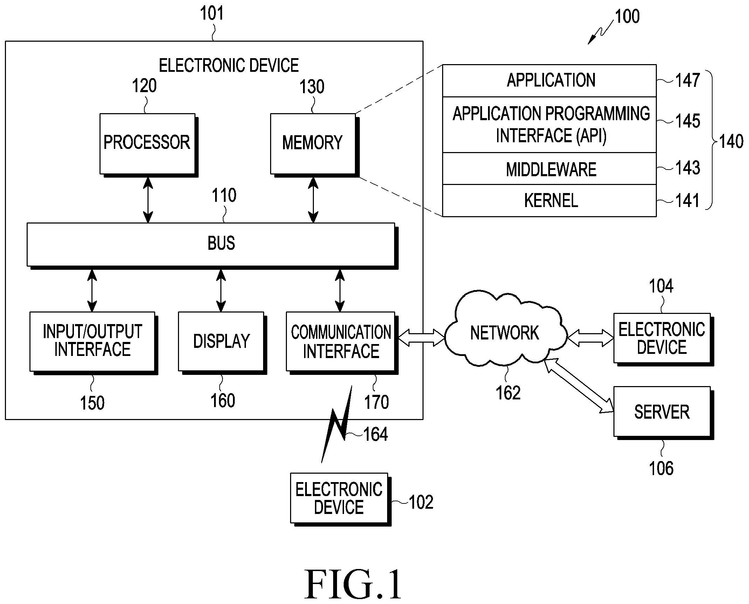

Descriptions will be made of an electronic device 101 within a network environment 100 in various embodiments with reference to FIG. 1.

The electronic device 101 may include a bus 110, a processor 120, a memory 130, an input/output interface 150, a display 160, and a communication interface 170. In a certain embodiment, at least one of the above-mentioned components may be omitted from the electronic device 101, or the electronic device may be additionally provided with other components.

The bus 110 may include, for example, a circuit that connects the above-mentioned components 110 to 170 to each other and transmits communication (e.g., a control message or data) among the components.

The processor 120 may include one or more of a Central Processing Unit (CPU), an Application Processor (AP), and a Communication Processor (CP). The processor 120 may execute, for example, an arithmetic operation or data processing that is related to control and/or communication of one or more other components of the electronic device 101.

The memory 130 may include volatile memory and/or non-volatile memory. The memory 130 may store, for example, commands or data that are related to one or more other components of the electronic device 101. According to one embodiment, the memory 130 may store software and/or a program 140. The program 140 may include, for example, a kernel 141, a middleware 143, an Application Programming Interface (API) 145, and/or an application program (or an "application") 147 or the like. At least a part of the kernel 141, the middleware 143, or the API 145 may be referred to as an Operating System (OS).

The kernel 141 may control or manage, for example, system resources (e.g., the bus 110, the processor 120, and the memory 130) that are used for executing operations or functions implemented in the other programs (e.g., the middleware 143, the API 145, or the application 147). In addition, the kernel 141 may provide an interface that allows the middleware 143, the API 145, or the application 147 to access individual components of the electronic device 101 so as to control or manage the system resources.

The middleware 143 may play an intermediary role such that, for example, the API 145 or the application 147 may communicate with the kernel 141 so as to exchange data.

In addition, the middleware 143 may process one or more task requests received from the applications 147, according to priority. For example, the middleware 143 may assign the priority to be capable of using a system resource of the electronic device 101 (e.g., the bus 110, the processor 120, or the memory 130) to at least one of the application programs 147. For example, the middleware 143 may perform scheduling, load balancing, or the like for the one or more task requests by processing the one or more requests according to the assigned priority.

The API 145 is, for example, an interface that allows the applications 147 to control functions provided from the kernel 141 or the middleware 143, and may include, for example, one or more interfaces or functions (e.g., commands) for file control, a window control, image processing, or character control.

The input/output interface 150 may serve as an interface to transmit commands or data, which are entered from, for example, a user or any other external device, to the other component(s) of the electronic device 101. Also, the input/output interface 150 may output commands or data, which are received from the other component(s) of the electronic device 101, to the user or the other external device.

The display 160 may include, for example, a Liquid Crystal Display (LCD), a Light-Emitting Diode (LED) display, an Organic Light-Emitting Diode (OLED) display, a MicroElectroMechanical System (MEMS) display, or an electronic paper display. The display 160 may display various contents (e.g., text, image, video, icon, or symbol) to, for example, the user. The display 160 may include a touch screen, and may receive a touch input, a gesture input, a proximity input, or a hovering input made using, for example, an electronic pen or a part of the user's body.

The communication interface 170 may set, for example, communication between the electronic device 101 and an external device (e.g., a first external electronic device 102, a second external device 104, or a server 106). For example, the communication interface 170 may be connected with a network 162 through wired or wireless communication so as to communicate with the external device (e.g., the second external electronic device 104 or the server 106).

The wireless communication may use at least one of, for example, Long-Term Evolution (LTE), LTE Advanced (LTE-A), Code Division Multiple Access (CDMA), Wideband CDMA (WCDMA), Universal Mobile Telecommunication System (UMTS), Wireless Broadband (WiBro), or Global System for Mobile communication (GSM), as a cellular communication protocol. In addition, the wireless communication may include, for example, short range communication 164. The short-range communication 164 may include at least one of, for example, Wireless Fidelity (Wi-Fi), Bluetooth, Near Field Communication (NFC), and Global Navigation Satellite System (GNSS). GNSS may include, for example, at least one of Global Positioning System (GPS), Global Navigation Satellite System (GLONASS), BeiDou Navigation Satellite System (hereinafter, "BeiDou"), Galileo, and the European global satellite-based navigation system, according to, for example, a use area or band width. Herein, the term "GPS" may be interchangeably used with "GNSS" below. The wired communication may use at least one of, for example, Universal Serial Bus (USB), High Definition Multimedia Interface (HDMI), Recommended Standard 232 (RS-232), and Plain Old Telephone Service (POTS). The network 162 may include a telecommunication network, for example, at least one of a computer network (e.g., LAN or WAN), the internet, and a telephone network.

Each of the first and second external electronic devices 102 and 104 may be of a type the same as or different from that of the electronic device 101. According to one embodiment, the server 106 may include a group of one or more servers. According to various embodiments, all or some of the operations to be executed by the electronic device 101 may be executed by another electronic device or a plurality of other electronic devices (e.g., the electronic devices 102 and 104 or the server 106). According to one embodiment, in the case where the electronic device 101 should perform a certain function or service automatically or in response to a request, the electronic device 101 may request some functions or services that are associated therewith from the other electronic devices (e.g., the electronic devices 102 and 104 or the server 106), instead of or in addition to executing the functions or service by itself. The other electronic devices (e.g., the electronic devices 102 and 104 or the server 106) may execute the requested functions or additional functions, and may deliver the results to the electronic device 101. The electronic device 101 may provide the requested functions or services by processing the received results as they are or additionally. For this purpose, for example, a cloud computing technique, a distributed computing technique, or a client-server computing technique may be used.

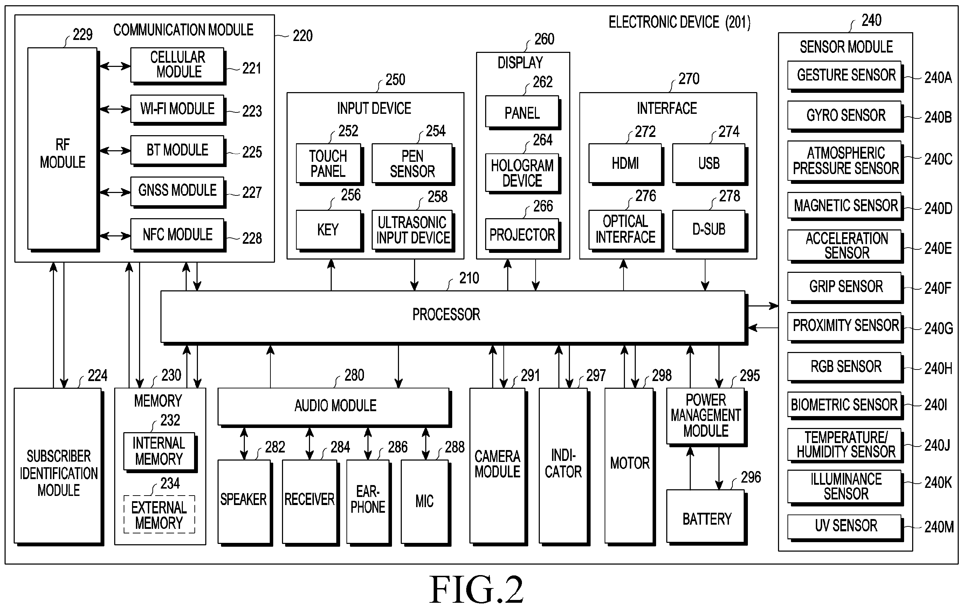

FIG. 2 is a block diagram of an electronic device 201 according to various embodiments.

The electronic device 201 may include, for example, the whole or a part of the electronic device 101 illustrated in FIG. 1. The electronic device 201 may include at least one processor (e.g., an Application Processor (AP)) 210, a communication module 220, a subscriber identification module 224, a memory 230, a sensor module 240, an input device 250, a display 260, an interface 270, an audio module 280, a camera module 291, a power management module 295, a battery 296, an indicator 297, and a motor 298.

The processor 210 may drive, for example, an operating system or an application program so as to control a plurality of hardware or software components connected thereto, and may also perform various data processing and arithmetic operations. The processor 210 may be implemented by, for example, a System-on-Chip (SoC). According to one embodiment, the processor 210 may further include a Graphic Processing Unit (GPU) and/or an image signal processor. The processor 210 may include at least some components (e.g., a cellular module 221) among the components illustrated in FIG. 2. The processor 210 may load a command or data received from at least one of the other components (e.g., non-volatile memory) in volatile memory to process the command and data, and may store various data in non-volatile memory.

The communication module 220 may have a configuration that is the same as or similar to that of the communication interface 170 of FIG. 1. The communication module 220 may include, for example, a cellular module 221, a Wi-Fi module 223, a Bluetooth module 225, a GNSS module 227 (e.g., GPS module, GLONASS module, BeiDou module, or Galileo module), an NFC module 228, and a Radio Frequency (RF) module 229.

The cellular module 221 may provide, for example, a voice call, a video call, a message service, or an internet service through a communication network. According to one embodiment, the cellular module 221 may perform discrimination and authentication of the electronic device 201 within the communication network using the subscriber identification module (e.g., a SIM card) 224. According to one embodiment, the cellular module 221 may perform at least some of the functions that may be provided by the processor 210. According to one embodiment, the cellular module 221 may include a Communication Processor (CP).

Each of the Wi-Fi module 223, the Bluetooth module 225, the GNSS module 227, and the NFC module 228 may include, for example, a processor to process data transmitted/received through the corresponding module. According to a certain embodiment, at least some (e.g., two or more) of the cellular module 221, the Wi-Fi module 223, the Bluetooth module 225, the GNSS module 227, and the NFC module 228 may be incorporated in a single Integrated Chip (IC) or an IC package.

The RF module 229 may transmit/receive a communication signal (e.g., an RF signal). The RF module 229 may include, for example, a transceiver, a Power Amp Module (PAM), a frequency filter, a Low Noise Amplifier (LNA), or an antenna. According to another embodiment, at least one of the cellular module 221, the Wi-Fi module 223, the Bluetooth module 225, the GNSS module 227, and the NFC module 228 may transmit/receive an RF signal through one or more separate RF modules.

The subscriber identification module 224 may include, for example, a card that includes a subscriber identification module and/or an embedded SIM, and may also include intrinsic identification information (e.g., an Integrated Circuit Card IDentifier (ICCID)) or subscriber information (e.g., an International Mobile Subscriber Identity (IMSI)).

The memory 230 (e.g., the memory 130) may include, for example, an internal memory 232 or an external memory 234. The internal memory 232 may include at least one of, for example, a volatile memory (e.g., Dynamic RAM (DRAM), Static RAM (SRAM), or Synchronous DRAM (SDRAM)), a non-volatile memory (e.g., One Time Programmable ROM (OTPROM), Programmable ROM (PROM), Erasable and Programmable ROM (EPROM), Electrically Erasable and Programmable ROM (EEPROM), mask ROM, flash ROM, flash memory (e.g., NAND flash memory, or NOR flash memory), hard drive, or Solid State Drive (SSD)).

The external memory 234 may further include a flash drive (e.g., Compact Flash (CF), Secure Digital (SD), Micro Secure Digital (Micro-SD), Mini Secure Digital (Mini-SD), extreme Digital (xD), Multi-Media Card (MMC), or memory stick). The external memory 234 may be functionally and/or physically connected to the electronic device 201 through various interfaces.

For example, the sensor module 240 may measure a physical quantity or may sense an operating status of the electronic device 201, and may then convert the measured or sensed information into electric signals. The sensor module 240 may include at least one of, for example, a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., RGB (Red, Green, Blue) sensor), a biometric sensor 240I, a temperature/humidity sensor 240J, an illuminance sensor 240K, and an Ultra-Violet (UV) sensor 240M. Additionally or alternatively, the sensor module 240 may include, for example, an E-nose sensor, an ElectroMyoGraphy (EMG) sensor (not illustrated), an ElectroEncephaloGram (EEG) sensor, an ElectroCardioGram (ECG) sensor, an Infra-Red (IR) sensor, an iris sensor, and/or a fingerprint sensor. The sensor module 240 may further include a control circuit for controlling one or more sensors incorporated therein. In a certain embodiment, the electronic device 201 may further include a processor configured to control the sensor module 240 as a part of the AP 210 or separate from the AP 210 so as to control the sensor module 240 while the AP 210 is in the sleep state.

The input device 250 may include, for example, a touch panel 252, a (digital) pen sensor 254, a key 256, or an ultrasonic input device 258. As the touch panel 252, at least one of, for example, a capacitive-type touch panel, a resistive-type touch panel, an infrared type touch panel, and an ultrasonic-type panel may be used. Also, the touch panel 252 may further include a control circuit. The touch panel 252 may further include a tactile layer so as to provide a tactile reaction to the user.

The (digital) pen sensor 254 may be, for example, a portion of the touch panel or may include a separate recognition sheet. The key 256 may include, for example, a physical button, an optical key, or a keypad. The ultrasonic input device 258 may sense, through a microphone (e.g., a microphone 288), ultrasonic waves generated by an input tool so as to confirm data corresponding to the sensed ultrasonic waves.

The display 260 (e.g., the display 160) may include a panel 262, a hologram device 264, or a projector 266. The panel 262 may include a configuration that is the same as or similar to that of the display 160 of FIG. 1. The panel 262 may be implemented to be, for example, flexible, transparent, or wearable. The panel 262 may be configured as a single module with the touch panel 252. The hologram device 264 may show a stereoscopic image in the air using light interference. The projector 266 may project light onto a screen so as to display an image. The screen may be located, for example, inside or outside the electronic device 201. According to one embodiment, the display 260 may further include a control circuit to control the panel 262, the hologram device 264, or the projector 266.

The interface 270 may include, for example, a High-Definition Multimedia Interface (HDMI) 272, a Universal Serial Bus (USB) 274, an optical interface 276, or a D-subminiature (D-sub) interface 278. For example, the interface 270 may be included in the communication interface 170 illustrated in FIG. 1. Additionally or alternatively, the interface 270 may include, for example, a Mobile High-definition Link (MHL) interface, a Secure Digital (SD) card/Multi-Media Card (MMC) interface, or an Infrared Data Association (IrDA) standard interface.

The audio module 280 may bi-directionally convert, for example, sound and electric signals. At least some of the components of the audio module 280 may be included in, for example, the input/output interface 145 illustrated in FIG. 1. The audio module 280 may process sound information input or output through, for example, a speaker 282, a receiver 284, an earphone 286, or a microphone 288.

The camera module 291 is a device that is capable of photographing, for example, a still image and a video image, and according to one embodiment, the camera module 291 may include at least one image sensor (e.g., a front sensor or a back sensor), a lens, an Image Signal Processor (ISP), or a flash (e.g., LED or xenon lamp).

The power management module 295 may manage, for example, the electric power of the electronic device 201. According to one embodiment, the power management module 295 may include a Power Management Integrated Circuit (PMIC), a charger Integrated Circuit (IC), or a battery or fuel gauge. The PMIC may be configured as a wired and/or wireless charging type. The wireless charging type may include, for example, a magnetic resonance type, a magnetic induction type, or an electromagnetic wave type, and may further include an additional circuit for wireless charging (e.g., a coil loop, a resonance circuit, or a rectifier). The battery gauge may measure the remaining charge of the battery 296, and a voltage, a current, or a temperature during charging. The battery 296 may include, for example, a rechargeable battery and/or a solar battery.

The indicator 297 may indicate a specific status (e.g., a booting status, a message status, or a charged status) of the electronic device 201 or of a part thereof (e.g., AP 210). The motor 298 may convert an electric signal into a mechanical vibration, and may generate a vibration, a haptic effect, or the like. Although not illustrated, the electronic device 201 may include a processor (e.g., a GPU) to support a mobile TV. The processor to support a mobile TV may process media data according to the standards of, for example, Digital Multimedia Broadcasting (DMB), Digital Video Broadcasting (DVB), or MediaFlo™.

Each of the above-described component elements of hardware according to the present disclosure may be configured with one or more components, and the names of the corresponding component elements may vary based on the type of electronic device. The electronic device according to various embodiments of the present disclosure may include at least one of the aforementioned elements. Some elements may be omitted or other additional elements may be further included in the electronic device. Also, some of the hardware components according to various embodiments may be combined into one entity, which may perform functions identical to those of the relevant components before the combination.

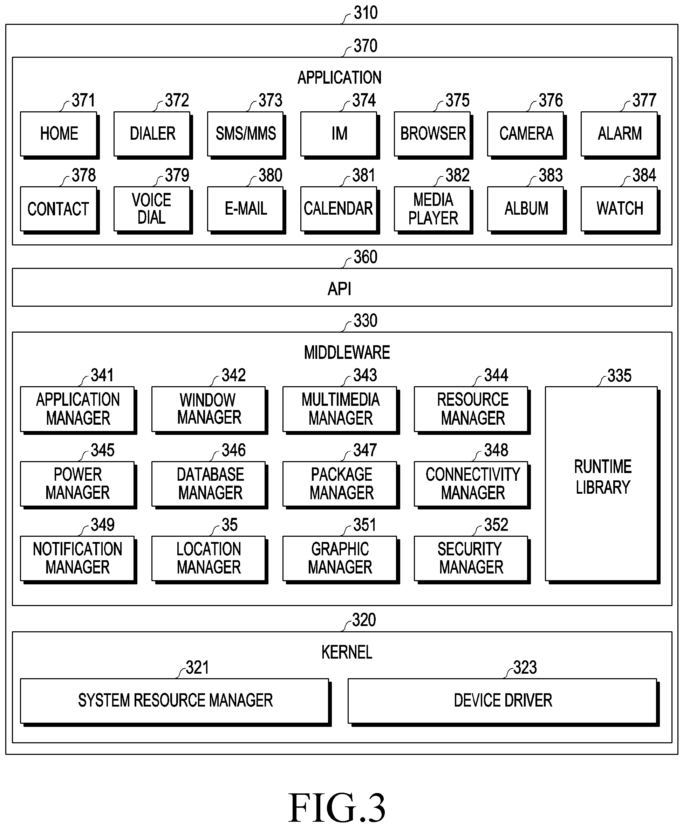

FIG. 3 is a block diagram illustrating a program module according to various embodiments.

According to one embodiment, a program module 310 (e.g., the program 140) may include an Operating System (OS) that controls resources associated with an electronic device (e.g., the electronic device 101) and/or various applications (e.g., the application program 147) that are driven on the operating system. The operating system may be, for example, Android, iOS, Windows, Symbian, Tizen, or Bada.

The program module 310 may include a kernel 320, middleware 330, an Application Programming Interface (API) 360, and/or an application 370. At least a part of the program module 310 may be preloaded on the electronic device, or may be downloaded from an external electronic device (e.g., the device 102 or 104 or the server 106).

The kernel 320 (e.g., the kernel 141) may include, for example, a system resource manager 321 and/or a device driver 323. The system resource manager 321 may perform, for example, control, allocation, or recovery of a system resource. According to one embodiment, the system resource manager 321 may include, a process management unit, a memory management unit, a file system management unit, or the like. The device driver 323 may include, for example, a display driver, a camera driver, a Bluetooth driver, a common memory driver, a USB driver, a keypad driver, a Wi-Fi driver, an audio driver, or an Inter-Process Communication (IPC) driver.

The middleware 330 may provide, for example, a function that is commonly required by the applications 370, or may provide various functions to the applications 370 through the API 360 such that the applications 370 can efficiently use the limited system resources within the electronic device. According to one embodiment, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352.

The runtime library 335 may include, for example, a library module that is used by a compiler in order to add a new function through a program language while the applications 370 are executed. The runtime library 335 may perform, input/output management, memory management, a function for an arithmetic function, or the like.

The application manager 341 may manage, for example, the life cycle of at least one application among the applications 370. The window manager 342 may manage a GUI resource that is used in a screen. The multimedia manager 343 may grasp a format required for reproducing various media files, and may perform encoding or decoding of the media files using a codec that is suitable for the corresponding format. The resource manager 344 may manage a resource, such as a source code, a memory, or a storage space, of at least one application among the applications 370.

The power manager 345 is operated together with, for example, a Basic Input/Output System (BIOS) so as to manage a battery or a power source, and may provide, for example, power information that is required for operating the electronic device. The database manager 346 may generate, retrieve, or change a database to be used by at least one application among the applications 370. The package manager 347 may manage the installation or update of an application that is distributed in the form of a package file.

The connectivity manager 348 may manage, for example, a wireless connection of Wi-Fi, Bluetooth, or the like. The notification manager 349 may display or notify events, such as an arrival message, appointment, and proximity notification in a manner that does not disturb the user. The location manager 350 may manage position information of the electronic device. The graphic manager 351 may manage a graphic effect to be provided to the user or a user interface associated therewith. The security manager 352 may provide all security functions required for, for example, system security, or user authentication. According to one embodiment, in the case where the electronic device (e.g., the electronic device 101) includes a phone function, the middleware 330 may further include a telephony manager in order to manage a voice or video call function of the electronic device.

The middleware 330 may include a middleware module that forms a combination of various functions of the above-described components. The middleware 330 may provide a module that is specialized for each kind of operating system in order to provide differentiated functions. In addition, the middleware 330 may dynamically delete some of the existing components or add new components.

The API 360 (e.g., the API 145) is, for example, a collection of API programming functions, and may be provided in different configurations for respective operating systems. For example, Android or iOS may provide one API set for each platform and Tizen may provide two or more API sets for each platform.

The applications 370 (e.g., the application program 147) may include, for example, one or more applications that can execute, for example, the functions of home 371, dialer 372, SMS/MMS 373, Instant Message (IM) 374, browser 375, camera 376, alarm 377, contact 378, voice dial 379, e-mail 380, calendar 381, media player 382, album 383, and clock 384, applications for supporting health care (e.g., measurement of a quantity of motion, or blood sugar), or providing environmental information (e.g., provision of atmospheric pressure, humidity, or temperature information).

According to one embodiment, the applications 370 may include an application that supports information exchange between the electronic device (e.g., the electronic device 101) and the external electronic devices (e.g., the electronic devices 102 and 104) (hereinafter, the application will be referred to as an "information exchange application" for the convenience of description). The information exchange application may include, for example, a notification relay application to transmit specific information to the external electronic devices, or a device management application to manage the external electronic devices.

For example, the notification relay application may include a function of relaying notification information generated from any other application of the electronic device (e.g., an SMS/MMS application, an e-mail application, a healthcare application, or an environment information application) to the external electronic devices (e.g., the electronic devices 102 and 104). In addition, the notification relay application may receive notification information from, for example, an external electronic device, and may provide the notification information to the user.

The device management application may manage (e.g., install, delete, or update) at least one function of an external electronic device (e.g., the electronic device 102 or 104) that communicates with the electronic device (e.g., turn-on/turn-off of the external electronic device itself (or some components thereof) or adjustment of brightness (or resolution) of a display), an application operated in the external electronic device, or a service provided by the external electronic device (e.g., a telephony service or a message service).

According to one embodiment, the applications 370 may include an application designated according to an attribute of an external electronic device (e.g., the electronic device 102 or 104) (e.g., a healthcare application of a mobile medical device). According to one embodiment, the applications 370 may include an application received from an external electronic device (e.g., the server 106 or the electronic device 102 or 104). According to one embodiment, the applications 370 may include a preloaded application or a third-party application that is capable of being downloaded from the server. The names of the components of the program module 310 according to the illustrated embodiment may vary depending on the kind of operating system.

According to various embodiments, at least a portion of the program module 310 may be implemented by software, firmware, hardware, or a combination of two or more thereof. At least a portion of the program module 310 may be implemented (e.g., executed) by, for example, a processor (e.g., the processor 210). At least a portion of the program module 310 may include, for example, a module, a program, a routine, a set of instructions, or a process for performing one or more functions.

The term "module" as used herein may, for example, mean a unit including one of hardware, software, and firmware or a combination of two or more of them. The "module" may be interchangeably used with, for example, the term "unit", "logic", "logical block", "component", or "circuit". The "module" may be a minimum unit of an integrated component element or a part thereof. The "module" may be a minimum unit for performing one or more functions or a part thereof. The "module" may be mechanically or electronically implemented. For example, the "module" according to the present disclosure may include at least one of an Application-Specific Integrated Circuit (ASIC) chip, a Field-Programmable Gate Arrays (FPGA), and a programmable-logic device for performing operations which has been known or are to be developed hereinafter.

According to various embodiments, at least some of the devices (for example, modules or functions thereof) or the method (for example, operations) according to the present disclosure may be implemented by a command stored in a computer-readable storage medium in a programming module form. The instruction, when executed by a processor (e.g., the processor 120), may cause the one or more processors to execute the function corresponding to the instruction. The computer-readable storage medium may be, for example, the memory 130.

The computer readable recoding medium may include a hard disk, a floppy disk, magnetic media (e.g., a magnetic tape), optical media (e.g., a Compact Disc Read Only Memory (CD-ROM) and a Digital Versatile Disc (DVD)), magneto-optical media (e.g., a floptical disk), a hardware device (e.g., a Read Only Memory (ROM), a Random Access Memory (RAM), a flash memory), and the like. In addition, the program instructions may include high class language codes, which can be executed in a computer by using an interpreter, as well as machine codes made by a compiler. The aforementioned hardware electronic device may be configured to operate as one or more software modules in order to perform the operation of the present disclosure, and vice versa.

The programming module according to the present disclosure may include one or more of the aforementioned components or may further include other additional components, or some of the aforementioned components may be omitted. Operations executed by a module, a programming module, or other component elements according to various embodiments of the present disclosure may be executed sequentially, in parallel, repeatedly, or in a heuristic manner. Furthermore, some operations may be executed in a different order or may be omitted, or other operations may be added. Various embodiments disclosed herein are provided merely to easily describe technical details of the present disclosure and to help the understanding of the present disclosure, and are not intended to limit the scope of the present disclosure. Therefore, it should be construed that all modifications and changes or modified and changed forms based on the technical idea of the present disclosure fall within the scope of the present disclosure.

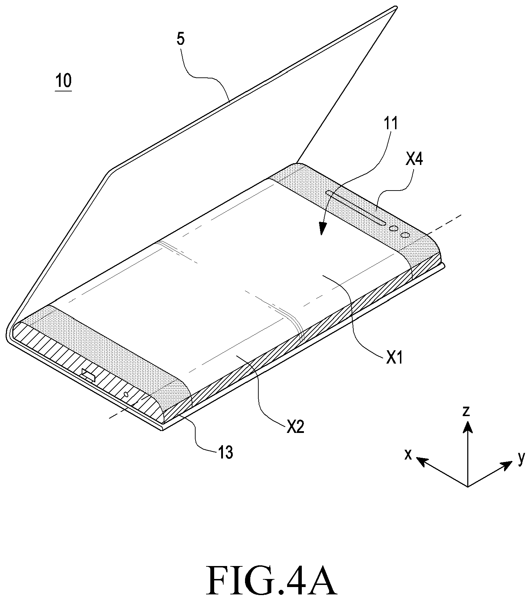

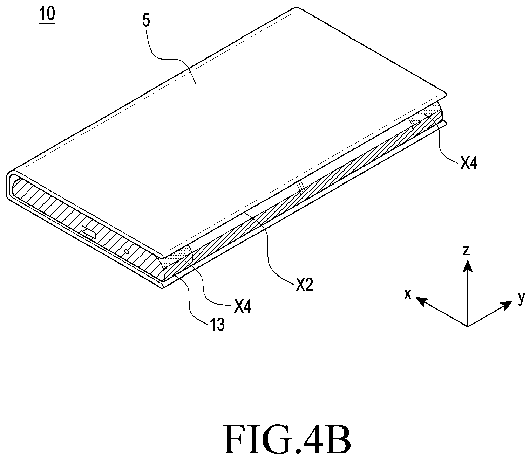

FIGS. 4A and 4B are perspective views of an electronic device according to various embodiments.

Referring to FIGS. 4A and 4B, according to various embodiments, an electronic device 10 may include a window 12 and a housing 13. According to one embodiment, at least one face of the window 12 may be curved. For example, the window 12 may be curved from a first direction (e.g., a z-axis direction) of the electronic device 10 in a second direction (e.g., an x-axis direction). Accordingly, the window 12 may include a first region X1 corresponding to the first direction and a second region X2 corresponding to the second direction.

The various embodiments are not limited thereto. According to various embodiments, the window 12 may be curved in two faces. For example, the window 12 may be curved from the first direction (e.g., the z-axis direction) to the second direction (e.g., the positive direction along the x-axis) and a third direction (e.g., the negative direction along the x-axis). Accordingly, the window 12 may include a first region X1 corresponding to the first direction, a second region X2 corresponding to the second direction, and a third direction corresponding to the third direction (not illustrated). In addition, the window 12 may be formed in a cylindrical shape to surround four faces of the electronic device.

According to various embodiments, the window 12 may include transparent regions X1 and X2 and an opaque region X4. For example, a partial region of the display disposed in the lower end of the window 12 may be exposed to the outside of the electronic device 10 through the transparent regions X1 and X2 of the window 12. For example, a component (e.g., a camera, a speaker, a microphone, or a proximity sensor) disposed in the lower end of the window 12 may not be exposed to the outside of the electronic device 10 by the opaque region X4 of the window 12.

According to various embodiments, the electronic device 10 may be connected to a cover 5 (also referred to as a "protective cover 5"). According to one embodiment, the cover 5 may cover at least one face of the electronic device 10. Referring to FIG. 4B, the cover 5 may cover at least three faces of the electronic device 10. Accordingly, the display region X2 of the curved window 10 may be exposed to the outside in the state in which the cover 5 covers the electronic device 10. The various embodiments are not limited thereto. According to one embodiment, the cover 5 may cover four faces of the electronic device 10. Accordingly, the curved window 12 may not be exposed to the outside in the state in which the cover 5 covers the electronic device 10. In addition, the cover 5 may cover one face of the electronic device 10. Accordingly, the entire curved window 12 may be exposed to the outside in the state in which the cover 5 covers the electronic device 10.

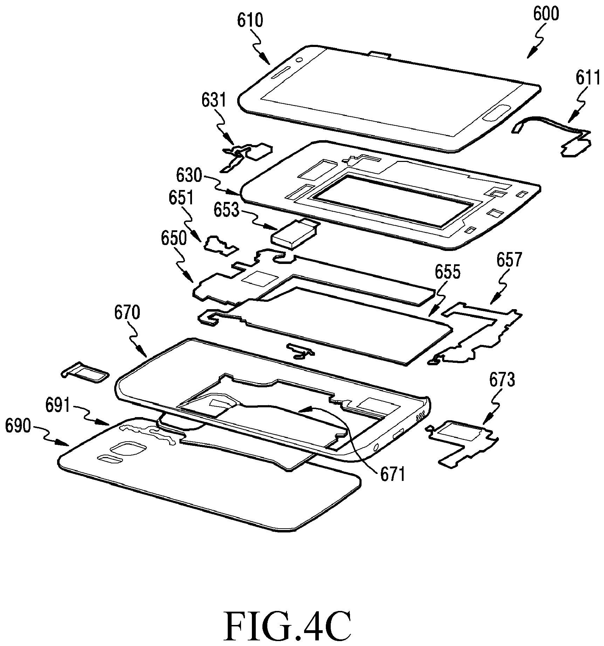

FIG. 4C is a perspective view of an electronic device according to various embodiments.

Referring to FIG. 4C, an electronic device 600 (e.g., the electronic device 10) may include a display module 610, a home key 611, a front body 630, a main speaker/microphone module 631, a main PCB 650, a front camera 651, a rear camera 653, a battery 655, a sub-PCB 657, a rear body 670, a wireless charging module 671, a sub-speaker/microphone module 673, a battery cover 5 or 690, and an antenna 691.

According to one embodiment, the display module 610 may be disposed on the front portion of the electronic device 600. According to one embodiment, the home key 611 may be connected to the main PCB 650. For example, the home key 611 may be disposed in the lower end of the display module 610. According to one embodiment, the front body 630 may support the display module 610 and the home key 611. For example, the front body 630 may be fastened to the display module 610.

Although not illustrated, according to one embodiment, the display module 610 may include a window and a display. The window may cover at least a part of the display. The display may, for example, be curved in at least a portion thereof (e.g., at least one side face).

According to one embodiment, the main speaker/microphone module 631 may be connected to the main PCB 650. For example, the main speaker/microphone module 631 may be disposed in the upper end of the display module 610. The main speaker/microphone module 631 may be mounted between the display module 610 and the front body 630. According to one embodiment, the main PCB 650 may be disposed on the rear face of the front body 630. According to one embodiment, the front camera 651 and the rear camera 653 may be connected to the main PCB 650. For example, the front camera 651 and the rear camera 653 may be disposed between the front body 630 and the main PCB 650. The front camera 651 may face the display module 610, and the rear camera 653 may face the battery cover 5 or 690.

According to one embodiment, the battery 655 may be disposed on the rear face of the front body 630. For example, the battery 655 may be disposed on one side of the main PCB 650. According to one embodiment, the sub-PCB 657 may be connected to the main PCB 650. For example, the sub-PCB 657 may be disposed on one side of the main PCB 650 and the battery 655. According to one embodiment, the rear body 670 may support the display module 610, the home key 611, the front body 630, the main speaker/microphone module 631, the main PCB 650, the front camera 651, the rear camera 653, the battery 655, and the sub-PCB 657. For example, the rear body 670 may be fastened to the front body 630. According to one embodiment, the wireless charging module 671 may be coupled to a battery 655. For example, the wireless charging module 671 may be attached to at least one of the battery 655 or the battery cover 5 or 690. The sub-speaker/microphone module 673 may be connected to the sub-PCB 657. For example, the sub-speaker/microphone 673 may be disposed in the lower end of the rear body 670.

According to one embodiment, the battery cover 5 or 690 may be disposed on the rear face of the rear body 670. For example, the battery cover 5 or 690 may be fastened to the rear body 670. According to one embodiment, an antenna 691 may be attached to the rear face of the rear body 670.

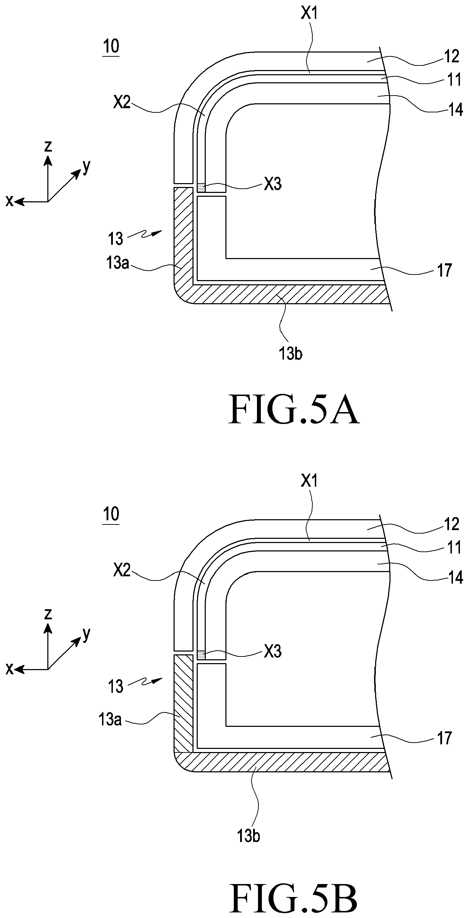

FIGS. 5A and 5B are cross-sectional views of an electronic device 10 according to various embodiments.

Referring to FIGS. 5A and 5B, according to various embodiments, the electronic device 10 may include a display 11, a window 12, a housing 13, and a bracket 14 (also referred to as a "display bracket"). According to various embodiments, the present disclosure is not limited to those illustrated in the drawings. For example, the electronic device 10 may not include the bracket 14.

According to one embodiment, the display 11 may be exposed to one face of the housing 13 (e.g., through the one face). The display 11 may include, for example, a display panel, at least one input/output panel, an adhesive member for bonding the above-mentioned panels, and the like. The panels may be stacked to form, for example, a lamination.

According to one embodiment, the display 11 including the above-mentioned panels may include display regions X1 and X2 on which a screen is displayed and a non-display region X3 on which no screen is displayed. According to one embodiment, the display 11 may extend from the first direction (e.g., the z-axis direction) to the second direction (e.g., the x-axis direction) with respect to the electronic device 10.

The display regions X1 and X2 may include, for example, a touch panel. Accordingly, it is possible to detect a touch and to perform an input/output function of, for example, displaying a screen. The display regions X1 and X2 (view areas) may include a first display region X1 (view area) corresponding to the first direction and a second display region X2 (view area) corresponding to the second direction.

In one embodiment of the present disclosure, the first display region X1 may be formed flat in the first direction with respect to the electronic device 10.

According to one embodiment, the second display region X2 may extend from the first direction to the second direction with respect to the electronic device 10 in at least one edge of the first display region X1. For example, the second display region X2 may be bent (curved) at a predetermined curvature in at least one edge of the first display region X1 in the second direction.

The first display region X1 may have, for example, a flat rectangular shape. The second display region X2 may extend from one side (e.g., the right side, the left side, the left and right sides, the lower side, the upper side, or the upper and lower sides) of, for example, the first display region X1 to be bent (curved). The second display region X2 may extend in the second direction (e.g., the positive direction along the X axis) and the third direction (e.g., the negative direction along the X axis) from the opposite lateral sides of the first display region X1 formed in the first direction to be bent. In addition, the second display region X2 may extend in the second direction from the upper side, the lower side, or the opposite lateral sides and upper and lower sides of the first display region X1 formed in the first direction (e.g., the z-axis direction) to be bent (curved). According to various embodiments, the shape of the second display region X2 is not limited to the described shape, and the formed position, the bent shape, and the like of the second display region X2 may be variously modified or changed as desired.

According to various embodiments, the display 11 (e.g., the second display region X2) may be bent and extend in the second direction from the first display region X1 formed in the first direction of the electronic device 10.

According to one embodiment, the non-display region X3 may be formed on at least a part of the edges (e.g., the periphery) of the display regions X1 and X2. On the non-display region X3, for example, a signal transmission line, a circuit board unit, or the like may be disposed. For example, according to one embodiment, the non-display region X3 may be disposed on the upper, lower, left, or right end of the display regions X1 and X2. For example, the non-display region X3 may be disposed at the upper or lower end of the first display region X1. For example, the non-display region X3 may be disposed on the upper or lower end and a lateral side of the second display region X2.

Since a signal transmission line, a circuit board unit, and the like according to a touch integrated circuit (IC) or the like of the touch panel are disposed in at least a part of the edges (e.g., the periphery) of, for example, the display regions X1 and X2, the non-display regions X3 and X4 may be formed to shield the signal transmission line and the circuit board unit, so that they are not visible. The non-display region X3 may be formed to be opaque, for example, through printing, coating, or the like.

According to one embodiment, the display 11 may be made by stacking a plurality of panels made of a flexible material. In addition, a least a portion (e.g., a side face) of the display 11 may be curved (bent).

According to one embodiment, the non-display region X3 may be covered by the housing 13 so as not to be exposed to the outside.

According to various embodiments, the window 12 may extend from the first direction (e.g., the z-axis direction) to the second direction (e.g., the x-axis direction) so as to at least partially cover at least a portion of the display 11. The window 12 may be made of transparent glass so that, for example, the display regions X1 and X2 of the display 11 can be visually displayed to the outside. The window 12 may include a flat region and a bent region so as to cover at least a part or the whole of the first display region X1 and the second display region X2. The window 12 may be joined to the display 11 by a bonding member, for example, an Optically Clear Adhesive (OCA) film.

According to an embodiment, the display 11 may include a first display region X1 formed in the first direction (e.g., the z-axis direction), and a second display region X2 bent while extending in the second direction (e.g., the x-axis direction) from the first display region X1. Accordingly, in order to cover 5 the display 11 formed as described above, the window 12 may include a portion capable of covering the first display region X1 and a portion bent in the portion covering the first display region X1 to be capable of covering at least a part of the second display region X2.

According to various embodiments, the second display region X2 of the display 11 may be curved with a first curvature relative to the first display region X1. The window 12 stacked on the top of the display 11 may be bent with the first curvature to be the same as or similar to the display 11. In addition, the inner face of the window 12 stacked on the top of the display 11 may be curved with a curvature which is the same as or similar to the first curvature, and the outer face of the window 12 may be bent with a second curvature which is different from the first curvature (e.g., a curvature smaller than the first curvature).

According to various embodiments, the non-display region X3 of the display 11 may be disposed on the inner face of the housing 13. Accordingly, the non-display region X3 may not be exposed to the outside of the electronic device 10. A configuration, a form, or the like in which a non-display region X3, provided in an end of the second display region X2 according to the engagement between the housing 13 and the window 12 can be made invisible, may be described in each of various embodiments described below.

According to various embodiments, the housing 13 may form an outer face of the electronic device 10 together with the window 12. According to various embodiments, the housing 13 may be configured to seat (or support) the display 11 therein. According to various embodiments, a bracket 14 or the like may be mounted inside the housing 13 so as to support a circuit board or the display 11. According to various embodiments, the housing 13 may form at least a part of an outer face of the electronic device 10 corresponding to the second direction (e.g., the x-axis direction). Further, it is possible to cover the entire non-display region X3 in the second direction of the electronic device 10. According to various embodiments, the housing 13 may be joined with at least one side of the window 12.

According to the embodiment, the housing 13 may cover 5, for example, the rear case 17, in which a space for mounting a battery may be formed. According to various embodiments, the housing 13 may be located opposite the display 11 in the electronic device 10. According to various embodiments, the housing 13 may extend from the first direction (e.g., the negative direction along the z-axis) to the second direction (e.g., the x-axis direction). The housing 13 may include a region 13b (hereinafter, referred to as a "rear housing") corresponding to the first direction (e.g., the z-axis direction) and a region 13a (hereinafter, referred to as a "side housing") corresponding to the second direction (e.g., the x-axis direction).

According to one embodiment, the housing 13 may be configured such that the side housing 13a and the rear housing 13b are implemented as one piece (see FIG. 5A). Here, the term "one piece" refers to a shape which is formed by injection molding or the like without a joint plane or the like not to be separable. For example, the one piece may include a shape that is no longer separable once joined through welding or the like. Thus, the housing 13 in which the side housing 13a and the rear housing 13b are implemented as one piece can be provided so as to form at least a portion (a side face) of the outer face of the electronic device 10 in the second direction and an outer face (rear face) of the electronic device 10 in the first direction of the electronic device 10.

Unlike this, according to one embodiment, the side housing 13a and the rear housing 13b may be formed separately (see FIG. 5B). For example, the side housing 13a may be provided so as to form at least a portion of the outer face (side face) of the electronic device 10 together with the window 12 so as to correspond to the second direction. In addition, the rear housing 13b may cover the rear case 17 in the first direction and may form the outer face (rear face) of the electronic device 10.

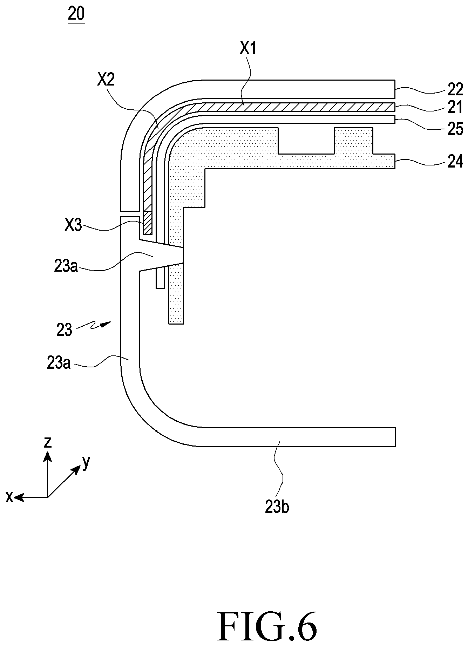

FIG. 6 is a cross-sectional view of an electronic device 20 according to various embodiments. Hereinafter, the description of parts overlapping those of FIGS. 5A and 5B may be omitted. According to various embodiments, the electronic device 20 may include a window 22, a display 21, a bracket 24, a member 25, and a housing 23. Referring to FIG. 6, in the electronic device 20 according to one embodiment, when the window 22 and the housing 23 are joined with each other, a non-display region X3 disposed in the end of the display 21 in the second direction may be disposed outside the end portion of the window 22, so that the non-display region X3 may not be covered by the window 22.

In addition, as described above, the display 21 according to one embodiment (e.g., the second display region X2) may be curved with a first curvature in the first display region X1. In addition, the inner face of the window 22 facing the surface of the display 21 may have a curvature corresponding to a first curvature such that the window 22 stacked on the top of the display 21 corresponds to the display 21 curved with the first curvature, and the outer face of the window 22 may be curved with a second curvature from the first direction to the second direction. That is, the inner face of the window 12 stacked on the top of the display 11 may be curved with a curvature, which is the same as or similar to the first curvature, and the outer face of the window 12 may be curved with a second curvature, which is different from the first curvature (e.g., a curvature smaller than the first curvature). According to various embodiments, the second curvature of the window 22 may be the same as the first curvature of the display 21. However, in the case where the non-display region X3 is not correctly covered at the time of assembly of the window 22 and the housing 23 (in the case where at least a part is not covered by the housing 23), the first curvature and the second curvature may be formed to be different from each other so as to minimize the exposure of the non-display region X3 to the outside, so that the uncovered remaining portion of the non-display region X3 can be made invisible due to a refractive index.

In one embodiment, referring to the stacked state of the electronic device 20, the window 22 may be provided on the uppermost side of the electronic device 20, the display 21 and the bracket 24 are provided on the inner face of the window 22, and the housing 23 may have a structure that encloses the window 22, the display 21, and the bracket 24.

In the electronic device 20 of one embodiment, the member 25 may be laminated between the display 21 and the bracket 24 such that the non-display region X3 described above is maintained in the fixed state to be disposed inside the housing 23 when the housing 23 and the window 22 are joined with each other.

For example, as mentioned above, the display 21 according to an embodiment may be provided to extend in the first direction (e.g., the x-axis direction) and to be curved in the second direction (e.g., the z-axis direction) and the non-display region X3 may be provided in the end of the display 21 in the second direction (e.g., the negative direction along the z-axis).

The end portion of the member 25 provided in the second direction (e.g., the z-axis direction) under the display 21 may protrude from the end portion of the non-display region X3 provided in the end portion of the display 21 in the second direction (e.g., the z-axis direction), so that the end portion of the member 25 may not be at least partially covered by the display 21. In addition, the end portion of the member 25 may have the same length as the end of the bracket 24 so that the end portion of the member 25 is supported not to moved and thus covers the bracket 24, or may be disposed to be shorter than the end of the bracket 24 so that at least a partial region of the bracket 24 is not covered. In addition, the end portion of the window 22 in the second direction (e.g., the z-axis direction) may be provided up to the position of the non-display region X3 in the end portion of the display 21 in the second direction (e.g., the z-axis direction). Thus, in the stacked state of the ends of the window 22, the display 21, the member 25, and the bracket 24 in the second direction (e.g., the z-axis direction), the end of the window 22 is formed in the vicinity of the non-display region X3 of the display 21 to be the shortest, and the non-display region of the member 25 may not be covered by the window 22. In addition, the end of the member 25 may be formed to protrude beyond the end of the display 21 and to cover the entire end of the bracket 24 or to cover only a partial region of the end of the bracket 24.

The member 25 may be made of, for example, a material including a plastic film or a metal such as Steel Use Stainless steel (SUS).

The member 25 may have the same shape as the bent (curved) shape of the display 21 and may be provided so as to restrict the generation of outward restoration elasticity of the second display region X2 or the deformability of the shape of the second display region X2. Thus, the second display region X2 of the flexible display 21 can maintain the shape thereof, and when the window 22 in which the bent display 21 is stacked is assembled with the housing 23, the end portion thereof, in particular the non-display region X3, can be mounted while being introduced into the inside of the housing 23.

The housing 23 according to one embodiment may be joined with the window 22 to form the electronic device 20. According to one embodiment, the housing 23 may include a region protruding in a direction in which the display 23 is located at a position close to the end of the display 23. The protruding region of the housing 23 may be provided so as to cover the end of the display 21 which is not covered by the window 22.

According to one embodiment, an inwardly protruding engagement protrusion 23c may be formed in a partial region of the housing 23, which corresponds to the second direction (e.g., the z-axis direction) of the electronic device 20. The engagement protrusion 23c can be coupled to the bracket 24 through the member 25. According to one embodiment, the housing 23 may include a rear housing 23b and a side housing 23a, as mentioned above. The rear housing 23b and the side housing 23a may be formed as one piece, or may be separately implemented to be separated from each other.

First, in the case where the rear housing 23b and the side housing 23a are implemented as one piece, when the housing 23 is joined with the window 22, the engagement protrusion 23c, which protrudes toward the bracket 24 within the side housing 23a, is engaged with the bracket 24 formed in the second direction through the member 25 that supports the display 21, and may form an outer face of the electronic device 20 (e.g., a partial outer face (side face) of the electronic device 20 in the second direction and an outer face (rear face) of the electronic device 20 in the first direction).

Unlike this, in the case where the rear housing 23b and the side housing 23a are implemented to be separated from each other, the housing 23 (e.g., the side housing 23a) may be engaged with the bracket 24 to correspond to the window 22 in the second direction (e.g., the z-axis direction). That is, as the side housing 23a forms the outer surface (side surface) of the electronic device 20 while being mounted in the second direction (e.g., the z-axis direction) to correspond to the window 22, the engagement protrusion 23c protruding toward the bracket 24 inside the side housing 23a can be engaged with the bracket 24 formed in the second direction (e.g., the z-axis direction) through the member 25 that supports the display 21.

Accordingly, as the window 22 and the housing 23 are joined with each other while the display 21 is supported by the member 25, the non-display region X3 formed in the end of the display 21 in the second direction may not be exposed to the outside by being covered inside the end portion of the housing 23, so that only the display regions X1 and X2 may be exposed.

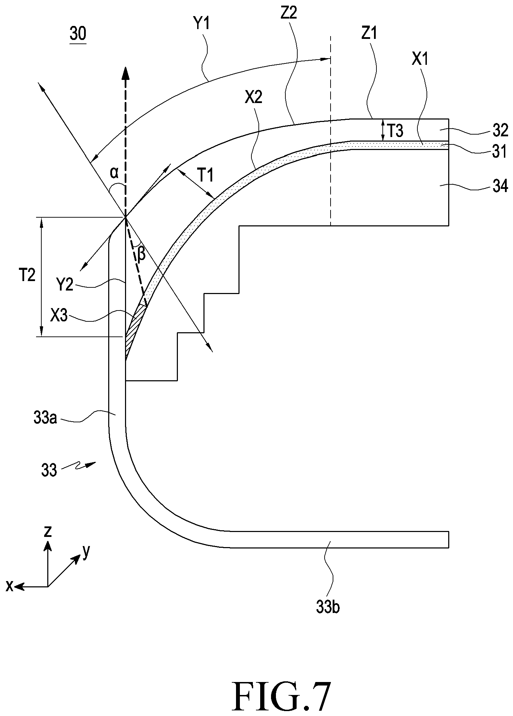

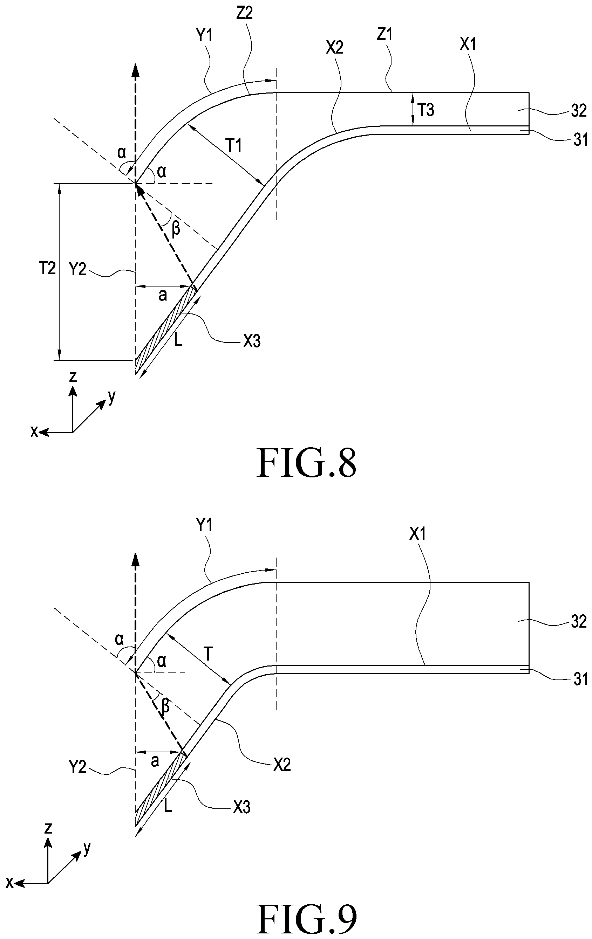

FIG. 7 is a cross-sectional view of an electronic device 30 according to various embodiments. FIG. 8 is a view illustrating that the curvature of the display 31 and the curvature of the window 32 are different from each other in the electronic device 30 according to various embodiments. FIG. 9 is a view illustrating that the curvature of the display 31 and the curvature of the window 32 are the same as each other in the electronic device 30 according to various embodiments.

Referring to Figure 7, the electronic device 30 according to various embodiments may include a window 32, a display 31, a bracket 34, and a housing 33. In the electronic device 30 according to one embodiment, the non-display region X3 formed in the end portion of the display 31 corresponding to the second direction (e.g., the z-axis direction) of the electronic device 30 may be at least partially covered by the window 32.

In addition, as described above, the display 31 according to one embodiment (e.g., the second display region X2) may be curved with a first curvature in the first display region X1. In addition, the window 32 stacked on the top of the display 31 may correspond to the display curved with a first curvature, the inner face of the window 32 facing the surface of the display 31 may have a curvature corresponding to the first curvature, and the outer face of the window 32 may be curved with a second curvature from the first direction to the second direction. The second curvature of the window 32 may be determined according to the position of the housing 33 covering the window 32 as the assembly of the window 32 and the display 31, the length of the non-display region X3, and the like such that the non-display region X3 is not exposed to the outside. Accordingly, according to various embodiments, the second curvature of the window 32 may be different from or may be the same as the first curvature of the display 31 depending on the position of the non-display region X3, the cover position of the housing 33, or the like.

First, it may be explained that the window 32 may be curved with a second curvature that is different from the first curvature of the display 31.

Referring to FIG. 7, an electronic device 30, for example, a display 31 according to one embodiment may be divided into a first region X1 corresponding to the first direction (e.g., the x-axis direction) and a second region X2+X3, which is bent in the second direction (e.g., the z-axis direction) to correspond to the first direction so as to form a predetermined curvature, in which the end of the second region X2+X3 of the display may be stacked on the end of the inner face of the window 32. At this time, the surface of the window 32 in the second direction may include a curvature region Y1 having a second curvature and a housing engagement region Y2 which is engaged with the inner side of the housing 33 to be covered.

According to one embodiment, the thickness T1 of the window 32 of the curvature region Y1 and the thickness T2 of the window 32 of the housing engagement region Y2 may be formed to be different from the thickness T3 of the window 32 formed in the first direction (e.g., the x-axis direction). That is, the window 32 may be divided into a third region Z1 corresponding to the first region X1 of the display 31 and a fourth region Z2 corresponding to the second region X2+X3. According to one embodiment, the thickness of the third region Z1 of the window 32 may be smaller than the thickness of the fourth region Z2. In this case, the thickness of the electronic device 30 can be reduced. For example, under the same conditions, i.e. when the first curvature of the display 31 and the position, the length, and the like of the non-display region X3 are fixed, compared with the case in which the second curvature of the window 32 to be described below (see FIG. 9) is formed to be the same as the first curvature of the display 31 such that the third region Z1 and the fourth region Z2 of the window 32 are formed to have the same thickness, the thickness of the window 32 formed in the first direction (see FIG. 8) according to one embodiment may be formed to be smaller than the thickness of the window 32 formed in the first direction as described below (see FIG. 9).

For example, the second curvature, the bent region of the window 32, and the thickness of the window 32 formed in the second direction may be set depending on the length of the first non-display region X3 through the following condition equation.

Condition Equation

$$\frac{\sin\theta_{Air}}{\sin\theta_{window}} = \frac{n_{window}}{n_{Air}}$$

$$\beta = \sin^{-1}\left(\frac{n_{air}}{n_{window}}\sin\alpha\right)$$

Here, $n_{air}$ may represent the refractive index of air ("1"), and $n_{window}$ may represent the refractive index of the material of the window 32.

In addition, the refractive indexes can be determined through the above-described conditional equation, and the length of the cover region Y2 in which the non-display region X3 is not exposed can be determined through the refractive indexes. Thus, when the housing 33 is joined with the window 32, the non-display region X3 may be covered by the housing 33 so as not to be exposed to the outside, and only the display regions X1 and X2 can be confirmed visually in at least a portion of the display 31.

The housing 33 according to one embodiment configured as described above may be joined with the window 32 so as to form the electronic device 30.

When the housing 33 and the window 32 are joined with each other, the housing 33 may be joined to face the housing engagement region Y2 of the window 32 in the second direction of the housing 33.

Since at least a part of the portion of the housing 33 in the second direction (e.g., the z-axis direction) faces the housing engagement region Y2 of the window 32 to be engaged with the housing engagement region Y2 of the window 32, the non-display region X3 is disposed inside the housing 33 and even if the user looks at the display regions X1 and X2 in a direction perpendicular to the first direction, the non-display region X3 can be made invisible from the outside by the second curvature of the window 32.

Referring to FIG. 9, the second display region X2 and the non-display region X3 of the display 31 according to one embodiment may be stacked in the state of being engaged with the end of the inner face of the window 32. At this time, the surface of the window 32 in the second direction (e.g., the z-axis direction) may include a curvature region Y1 having a second curvature and a housing engagement region Y2 which is engaged with the inner side of the housing 33 to be covered. The thicknesses of the curvature region Y1 and the window 32 of the housing engagement region Y2 may be the same. That is, the thicknesses of the third region Z1 and the fourth region Z2 of the window 32 may be the same. In this case, additional processing according to a thickness difference in the window 32 is not required. When the third region Z1 and the fourth region Z2 of the window 32 are implemented to be different from each other in thickness and to have a second curvature different from the first curvature of the display 31 in the preceding embodiment, an additional process may be required in order to process the third region Z1 of the window 32, in which the thicknesses of the third region Z1 and the fourth region Z2 of the window 32 are the same, such that the thickness of the third region Z1 is smaller than that of the fourth region Z2 (see FIG. 8). In contrast, in one embodiment, the thicknesses of the third region Z1 and the fourth region Z2 of the window 32 are constant, so that no additional processing is required.

In addition, according to one embodiment, the length of the non-display area X3, the second curvature of the window 32, and the thickness of the bent region and the window 32 formed in the second direction may be set through the following condition equation.

Condition Equation

$$\frac{sin\theta_{Air}}{sin\theta_{window}} = \frac{n_{window}}{n_{Air}}$$

$$\beta = sin^{-1}\left(\frac{n_{air}}{n_{window}}sin\alpha\right)$$

Here, $n_{air}$ may represent the refractive index of air ("1"), and $n_{window}$ may represent the refractive index of the material of the window 32.

In addition, the refractive indexes can be determined through the above-described conditional equation, and the length of the housing engagement region Y2 in which the non-display region X3 is not exposed can be determined through the refractive indexes. Thus, when the housing 33 is joined with the window 32, the non-display region X3 may be covered by the housing 33 so as not to be exposed to the outside, and only the display regions X1 and X2 can be confirmed visually in at least a portion of the display 31.

The housing 33 according to one embodiment configured as described above may be joined with the window 32 so as to form the electronic device 30.

When the housing 33 and the window 32 are joined with each other, the housing 33 may be joined to face the housing engagement region Y2 of the window 32 in the second direction of the housing 33.

Since at least a part of the portion of the housing 33 in the second direction faces the housing engagement region Y2 of the window 32 to be engaged with the housing engagement region Y2 of the window 32, the non-display region X3 is disposed inside the housing 33 and even if the user looks at the display regions X1+X2 in a direction (e.g., the z-axis direction) perpendicular to the first direction, the non-display region X3 can be made invisible from outside by the second curvature of the window 32.

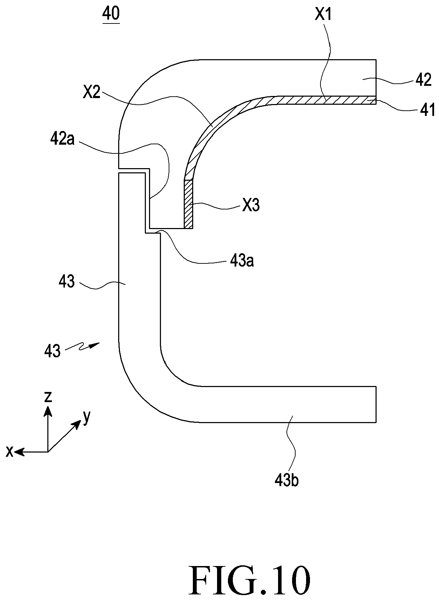

FIG. 10 is a view illustrating a configuration in which a display 41 is mounted between a housing 43 and a window 42 in the electronic device 40 according to various embodiments.

Referring to FIG. 10, in the electronic device 40 according to one embodiment, when the window 22 and the housing 43 are joined with each other, a non-display region X3 disposed in the end of the display 41 in the second direction of the electronic device 40 may be covered by the window 22.

In addition, as described above, the display 41 according to one embodiment (e.g., the second display region X2) may be curved with a first curvature in the first display region X1. In addition, the window 42 stacked on the top of the display 41 may correspond to the display curved with a first curvature, the inner face of the window 42 facing the surface of the display 41 may have a curvature corresponding to the first curvature, and the outer face of the window 42 may be curved with a second curvature from the first direction to the second direction. The second curvature of the window 42 may be determined according to the position of the housing 43 covering the window 42 as the assembly of the window 42 and the display 41, the length of the non-display region X3, and the like such that the non-display region X3 is not exposed to the outside. Accordingly, according to various embodiments, the second curvature of the window 42 may be different from or may be the same as the first curvature of the display 41 depending on the position of the non-display region X3, the cover position of the housing 43, or the like. In one embodiment, descriptions may be made of a case in which the first curvature of the window 41 and the second curvature of the display 42 are the same, as an example.

According to one embodiment, the window 42 may be divided into a first region X1 corresponding to a first direction (e.g., the x-axis direction) and a second region X2+X3 corresponding to a second direction (e.g., the x-axis direction). The surface of the window 42 corresponding to the non-display region X3 may be formed with a first seat face 42a, which may be engaged with the end of the housing 43 such that the non-display region X3 can be covered with the housing 43. The first seating face 42a may be formed in a groove shape bent from the surface of the window 42 toward the display 41 side. A second seating face 43c, which is engaged with the first seating face 42a, may be formed on the inner face of the housing 43 mounted in the second region at a position corresponding to the first seating face 42a.

The second seating face 43c may be seated in the groove shape bent from the inner face of the housing 43 toward the window 42 side.

The housing 43 according to one embodiment configured as described above may be joined with the window 42 so as to form the electronic device 40. When the housing 43 and the window 42 are joined with each other, the second seating face 43c of the housing 43 is engaged with the first seating face 42a to shield the non-display region X3, so that the display region X3 can be made invisible to the outside.

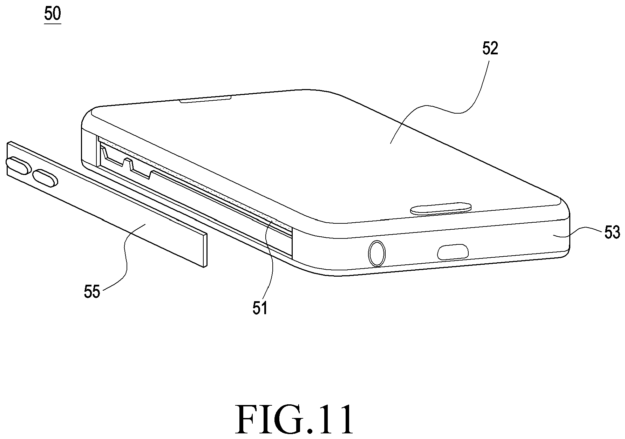

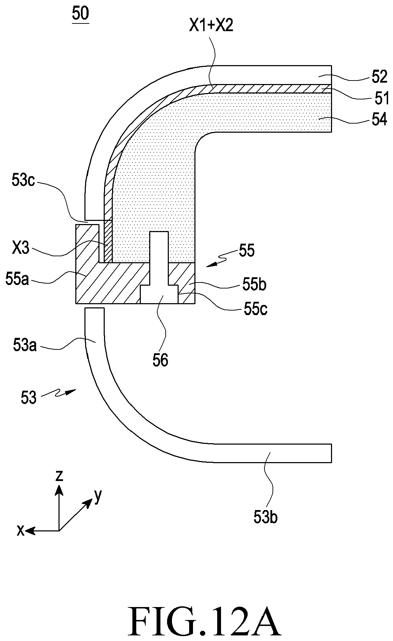

FIG. 11 is a perspective view of an electronic device 50 according to various embodiments. FIGS. 12A to 12D are cross-sectional views of an electronic device according to various embodiments.

Referring to FIGS. 11 to 12D, in the electronic device 50 according to one embodiment, when the window 52 and the housing 53 are joined to each other, a non-display region (corresponding to the "non-display region X3") disposed in the end of the display 51 in the second direction may be disposed outside the end portion of the window 52, so that the non-display region X3 may not be covered by the window 52.

In addition, as described above, the display 51 according to one embodiment (e.g., the second display region X2) may be curved with a first curvature in the first display region X1. In addition, the inner face of the window 52 facing the surface of the display 51 may have a curvature corresponding to a first curvature such that the window 52 stacked on the top of the display 51 corresponds to the display 51 curved with the first curvature, and the outer face of the window 52 may be curved with a second curvature from the first direction (e.g., the x-axis direction) to the second direction (e.g., the z-axis direction). According to various embodiments, the second curvature of the window 52 may be the same as the first curvature of the display 51. However, in the case where the non-display region X3 is not correctly covered at the time of assembly of the window 52 and the housing 53 (in the case where at least a part is not covered by the housing 53), the first curvature and the second curvature may be formed to be different from each other so as to minimize the exposure of the non-display region X3 to the outside, so that the uncovered remaining portion of the non-display region X3 can be made invisible due to a refractive index.

In one embodiment, referring to the stacked state of the electronic device 50, the window 52 may be provided on the uppermost side of the electronic device 50, the display 51 and the bracket 54 are provided on the inner face of the electronic device 20, and the housing 53 may have a structure that encloses the window 52, the display 51, and the bracket 54.

According to one embodiment, in the electronic device 50, in order to ensure that the non-display region X3, which is not covered by the window 52 at the time of assembly of the housing 53 and the window 52, is maintained in the fixed state so as to be disposed inside the housing 53, the bracket 54 may be provided up to the end of the display 51 and the end of the brackets 54 in the second direction may be formed to be equal to or longer than the end of the non-display region X3.

According to one embodiment, the housing 53 of the electronic device 50 may also be provided with members 55 and 56 capable of covering a portion of the display 51 that is not covered with the window 52 between the window 52 and the housing 53, for example, the non-display region X3.

According to one embodiment, the members 55 and 56 may include a cover unit 55 and a fastening unit 56.

The cover unit 55 may form at least a portion of the external face of the electronic device 50. For example, although descriptions have been made with reference to FIGS. 5A and 5B, in an embodiment, the housing 53 may be provided to cover the rear case 17 for mounting the battery, and the housing 53 may be implemented such that the side housing and the rear housing may be separated from each other. The cover portion 55 of the present disclosure may correspond to the side housing. That is, the side housing is supported by the bracket 54 between the window 52 and the housing 53, serving as the cover portion 55, and covers the portion (which may correspond to the non-display region X3), which is not covered by the window 52, thereby forming a portion of the outer face of the electronic device 50 in the second direction (e.g., the z-axis direction) while making the non-display region X3 invisible.

According to one embodiment, the fastening unit 56 may be provided so as to fix the cover unit 55, e.g. the side housing, between the housing 53 and the window 52. At least one of adhesive tape and a bonding member may be provided between the housing 53 and the cover portion 55 as the fastening unit 56.

Referring to FIGS. 12A to 12D, the cover unit 55 and the fastening unit 56 may be formed in various shapes so as to fix the side housing between the housing 53 and the window 52.

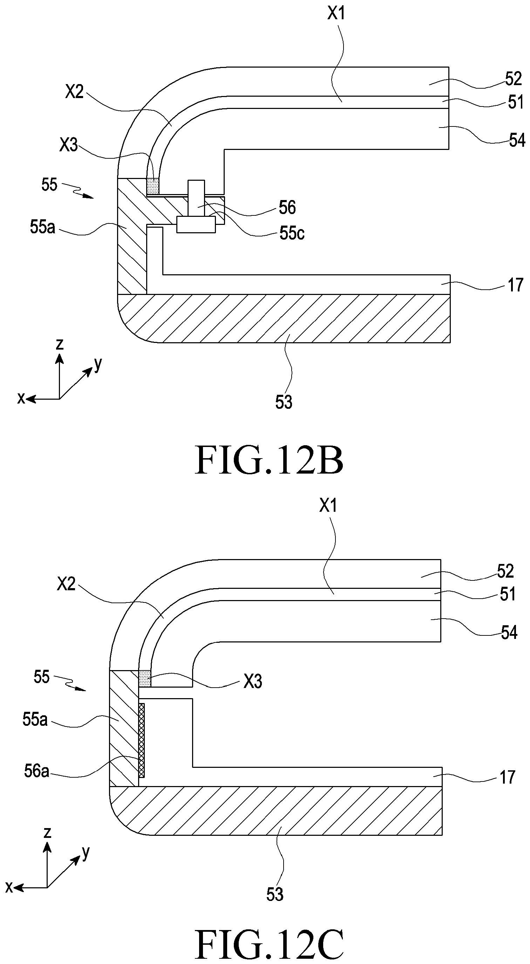

Referring to FIGS. 12A and 12B, according to one embodiment, the cover unit 55 may include a cover plate 55a mounted between the end of the window 52 and the end of the rear housing 53, and a protrusion plate 55b protruding from the inside of the cover plate 55a toward the bracket 54. At least one protrusion plate 55b may be provided on the inner surface of the cover plate 55a so as to extend to the inner face of the bracket 54 while being in contact with the end face of the bracket 54. The protrusion plate 55b may be provided with a fastening hole 55c to be described later. According to one embodiment, a fastening member such as a screw may be provided as the fastening unit 56. As the fastening unit 56 is fastened to the bracket 54 through the fastening hole 55c, the side housing can be fixed while covering the non-display region X3 between the window 52 and the housing 53. In one embodiment, descriptions have been made of a case in which the fastening unit is a screw fastened to the bracket 54 through the fastening hole 55c in the protrusion plate 55b as an example, but the present disclosure is not limited thereto. The present disclosure may be modified in such a manner that a face to be in contact with the non-display region X3 in the inner face of the housing and a face to be in contact with the bracket 54 are joined through a bonding material such as adhesive tape, for example.

Referring to FIG. 12C, according to one embodiment, the side housing may be implemented as a cover plate 55a that makes the non-display region invisible by covering the non-display region X3 while being mounted between the end of the window 52 and the end of the rear housing 53. According to one embodiment, the cover plate 55a may be coupled to the rear case 17 located in the second direction. At this time, a fastening unit 56 such as a bonding material may be provided between the cover plate 55a and the rear case 17. Descriptions have been made of a case according to an embodiment in which the cover plate 55a is fixed to the rear case 17, by way of an example. However, when the bracket 54 extends in the second direction (e.g., the z-axis direction) toward the rear housing 53 side, the cover plate 55a may be fixed to the bracket 54 through a fastening unit 56 such as a bonding material.

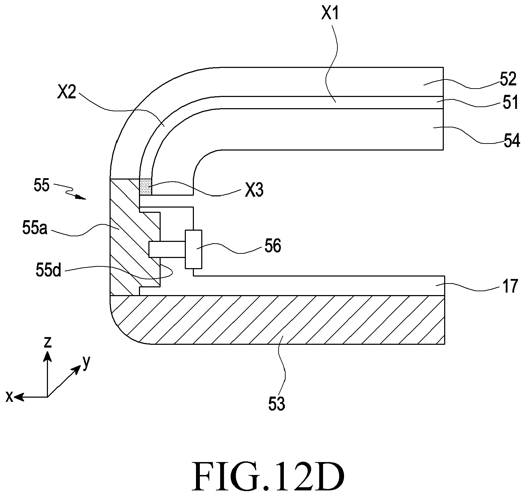

Referring to FIG. 12D, according to one embodiment, the side housing may be provided with a cover plate 55a mounted between the end of the window 52 and the end of the rear housing 53 to cover the non-display region X3, thereby making the non-display region invisible, and a protrusion face 55d protruding from the cover plate 55a to face the rear case 17. Further, the rear case 17 may be formed with a fastening hole to which a fastening unit 56 such as a screw is fastened. Thus, when the side housing is located between the window 52 and the housing 53 while covering the non-display region X3, on the inner side of the rear case 17, the fastening unit 56 is fixed to the protrusion face 55d through the fastening hole in the rear case 17, so that the side housing can be fixed.

Although descriptions have been made of a case in which, according to one embodiment, the cover plate 55a can be fastened to the rear case 17 located in the second direction, the present disclosure is not limited thereto. For example, the bracket 54 may extend in the second direction (e.g., the z-axis direction) toward the rear housing 53 side, and when the cover plate 55a is located between the window 52 and the housing 53 while covering the non-display region X3, on the inner side of the bracket 54, the fastening unit 56 may be fixed to the protrusion face 55d through a fastening hole formed in the bracket 54, thereby fixing the side housing.

The housing 53 according to one embodiment configured as described above may be joined with the window 52 so as to form the electronic device 50.

When the housing 53 and the window 52 are joined with each other, a space may be formed between the housing 53 and the window 52, and the non-display region X3 may be provided in the state of being exposed to the space side. As the cover unit 55 (e.g., the side housing) is mounted in the space and the fastening member fixes the side housing to the rear case 17, the bracket 54, or the like, the non-display region X3 can be made invisible by being covered by the side housing, and only the display region X1+X2 of the display 51 can be exposed.

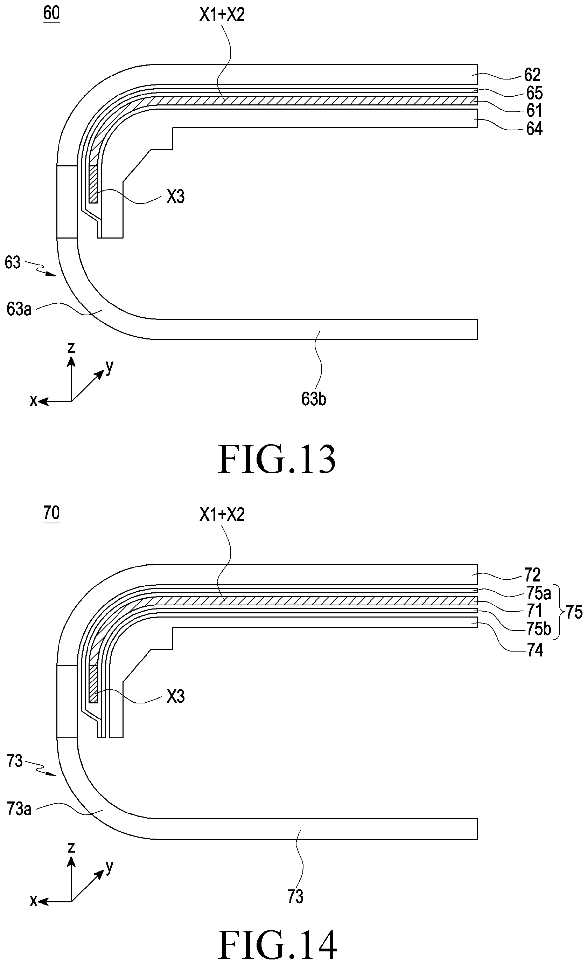

Hereinafter, with reference to FIG. 13, descriptions may be made of a configuration in which the non-display region according to one embodiment is covered when the window 62 and the housing 63 are joined with each other.

FIG. 13 is a cross-sectional view of an electronic device 60 according to various embodiments, in which a configuration in which a display 61 is mounted between a housing 63 and a window 62 according to various embodiments is illustrated.

Referring to FIG. 13, in the electronic device 60 according to one embodiment, when the window 62 and the housing 63 are joined with each other, a non-display region X3 disposed in the end of the display 61 in the second direction (e.g., the z-axis direction) may be disposed outside the end portion of the window 62, so that the non-display region X3 may not be covered by the window 62.

In addition, as described above, the display 61 according to one embodiment (e.g., the second display region X2) may be curved with a first curvature in the first display region X1. In addition, the inner face of the window 62 facing the surface of the display 61 may have a curvature corresponding to a first curvature such that the window 62 stacked on the top of the display 61 corresponds to the display 61 curved with the first curvature, and the outer face of the window 62 may be curved with a second curvature from the first direction (e.g., the x-axis direction) to the second direction (e.g., the z-axis direction). According to various embodiments, the second curvature of the window 62 may be the same as the first curvature of the display 61. However, in the case where the non-display region X3 is not correctly covered at the time of assembly of the window 62 and the housing 63 (in the case where at least a part is not covered by the housing 63), the first curvature and the second curvature may be formed to be different from each other so as to minimize the exposure of the non-display region X3 to the outside, so that the uncovered remaining portion of the non-display region X3 can be made invisible due to a refractive index.

In one embodiment, referring to the stacked state of the electronic device 60, the window 62 may be provided on the uppermost side of the electronic device 60, a member (hereinafter, referred to as a "first member 65"), the display 21, and the bracket 64 may be provided in this order on the inner face of the window 62, and the housing 63 may have a structure that encloses the window 62, the display 21, and the bracket 64. The first member 65 may be provided to be longer than the non-display region X3 and the end portion of the first member 65 may be engaged with at least a portion of the bracket 64 in the second region while enclosing the non-display region X3. Thus, when the window 62 and the housing 63 are joined with each other, the second region X2+X3 of the display 61, which extends to be bent in the first region X1 of the display 61, is not deformed or moved, so that the non-display region X3 can be disposed inside the housing 63 and the non-display area X3 can be made invisible.

The first member 65 may be made of a material including a plastic film or a metal such as SUS.

As described above, the first member 65 is disposed between the window 62 and the display 61 and the end of the first member 65 is joined to a partial region of the second region X2+X3 of the bracket 64 so as to fix the display 61 between the first member 65 and the bracket 64. Thus, it is possible to restrict the second region X2+X3 of the display 61 from being elastically restored outwardly or being deformed in shape. Thus, the second display region X2 of the flexible display 61 can maintain the shape thereof, and in the process of assembling the display 61 and the window 62, which are stacked in the bent state, are assembled with the housing 63, the end portions thereof, in particular the non-display region X3, can be mounted while being introduced into the inside of the housing 63.

According to one embodiment, the housing 63 may be divided into a rear housing and a side housing as mentioned above. The rear housing and the side housing may be formed as one piece, or may be separately implemented to be separated from each other.

Hereinafter, with reference to FIG. 14, descriptions may be made of a configuration in which the non-display region according to one embodiment is covered when the window 72 and the housing 73 are joined with each other.

FIG. 14 is a cross-sectional view of an electronic device 70 according to various embodiments, in which a configuration in which a display 71 is mounted between a housing 73 and a window 72 according to one embodiment is illustrated.

Referring to FIG. 14, in the electronic device 70 according to one embodiment, when the window 72 and the housing 73 are joined with each other, a non-display region disposed in the end of the display 71 in the second direction (e.g., the z-axis direction) may be disposed outside the end portion of the window 72, so that the non-display region X3 may not be covered by the window 72.

In addition, as described above, the display 71 according to one embodiment (e.g., the second display region X2) may be curved with a first curvature in the first display region X1. In addition, the inner face of the window 72 facing the surface of the display 71 may have a curvature corresponding to a first curvature such that the window 72 stacked on the top of the display 71 corresponds to the display 71 curved with the first curvature, and the outer face of the window 72 may be curved with a second curvature from the first direction (e.g., the x-axis direction) to the second direction (e.g., the z-axis direction). According to various embodiments, the second curvature of the window 72 may be the same as the first curvature of the display 71. However, in the case where the non-display region X3 is not correctly covered at the time of assembly of the window 72 and the housing 73 (in the case where at least a part is not covered by the housing 73), the first curvature and the second curvature may be formed to be different from each other so as to minimize the exposure of the non-display region X3 to the outside, so that the uncovered remaining portion of the non-display region X3 can be made invisible due to a refractive index.

In an embodiment, referring to the stacked state in the electronic device 70, the window 72 may be provided on the uppermost side of the electronic device 70 and a member (hereinafter, referred to as a "first member 75a"), the display 71, a member (hereinafter, referred to as a "second member 75b") different from the first the first member 75a, and the bracket 74 may be provided on the inner face of the window 72 in this order, the display 71 may be fixed between the first member 75a and the second member 75b, and the housing 73 may have a structure that encloses the window 72, the display 71, and the bracket 74.

In the electronic device 70 of one embodiment, the first member 75a and the second member 75b, which fix the display 71 between the display 72 and the bracket 74, may be laminated such that the non-display region X3 described above is maintained in the state of being fixed to the bracket 74 to be disposed inside the housing 73 when the housing 73 and the window 72 are joined with each other.

For example, as mentioned above, the display 71 according to an embodiment may be provided to extend in the first direction (e.g., the x-axis direction) and to be curved in the second direction (e.g., the z-axis direction) and the non-display region X3 may be provided in the end of the display 21 in the second direction (e.g., the z-axis direction).

The ends of the first member 75a and the second member 75b may be provided to be longer than the non-display region X3 provided at the end of the display 71 in the second direction (e.g., the z-axis direction), and the end portion of the second member 75b may have the same length as the end of the bracket 74 or may be shorter than the end of the bracket 74 so as to be supported on the bracket 74. The end of the window 72 in the second direction may be provided so as to cover the end of the display 71 in the second direction (e.g., the z-axis direction), for example, the end of the second display region X2, so that the non-display region X3 may not be covered.

Referring to the stacking state of the ends of the window 72, the first member 75a, the display 71, the second member 75b, and the bracket 74 in the second direction (e.g., the z-axis direction) 72, the end of the window 72 is formed in the vicinity of the non-display region X3 of the display 71 to be the shortest and the ends of the first member 75a and the second member 75b are provided to be longer than the end of the display 71 and to be shorter than the end of the bracket 74. The end of the first member 75a may be bent toward the second member 75b to be engaged with the end of the second member 75b while enclosing the non-display region X3. Thus, when the window 72 and the housing 73 are joined with each other, the second region X2+X3 extending to be bent in the first region X1 of the display 71 can be maintained in the bent state without being deformed or moved and the non-display region X3 can be made invisible by being located inside the housing 73.

The first member 75a and the second member 75b may be made of a material including a plastic film or a metal such as SUS.

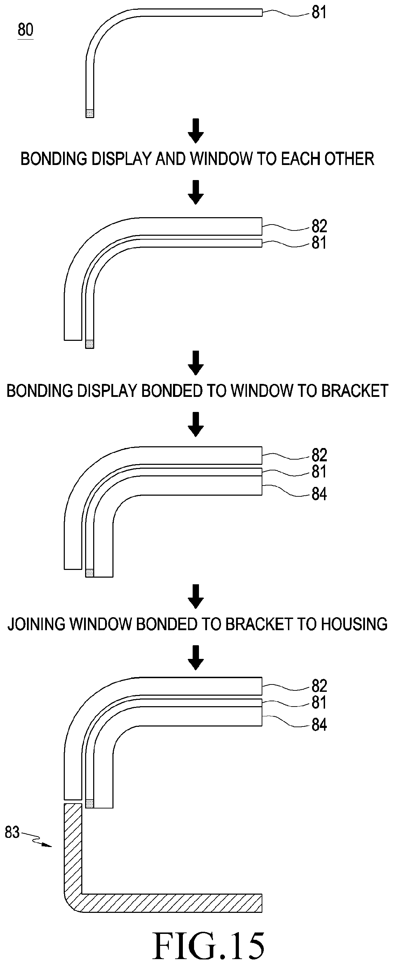

FIG. 15 is an assembly flowchart of an electronic device 80 according to various embodiments.

Referring to FIG. 15, a window 82 bent to have a first curvature or a second curvature different from the first curvature may be bonded to the top face of the display 81 having a first curvature and bent from a first direction (e.g., the x-axis direction) to a second direction (e.g., the z-axis direction) according to one embodiment. The non-display region X3 provided (e.g., located) in the end of the second region X2+X3 (e.g., the z-axis direction) of the display 81 may or may not be covered by the window 82 depending on the shape thereof according to various embodiments described above.

After the window 82 and the display 81 are assembled, the display 81 bonded to the window 82 may be bonded to (or mounted on) the bracket 84. The rear face of the display 81 (the second face of the display 81, which is the opposite side of the first face of the display 81 on which the window 82 is located) may be bonded to the bracket capable of supporting the display 81.

According to various embodiments, an assembly sequence may be added according to the shape (the various embodiments mentioned above) covering the non-display region X3 formed in the end of the display 81 in the second direction (e.g., the z-axis direction).

For example, in the case of the embodiment in which the member 25 is provided between the display 21 and the bracket 24 (see FIG. 6), a process of bonding the member to the rear face of the display may be added before the window 22 and the display 21 are bonded to the bracket 24 in the state in which the window 22 and the display 21 are bonded to each other.

For example, in the case of the embodiment, in which a member 65 is provided between the display 61 and the window 62 (see FIG. 13), a process of bonding the member 65 between the window 62 and the display 61 may be added before the process of bonding the window 62 and the display 61 to each other.

For example, in the case of the embodiment in which the first member 75a is provided between the display 71 and the window 72 and the second member 75b is provided between the display 71 and the bracket 74 (see FIG. 14), a process of bonding the first member 75a between the display 71 and the window 72 before the process of bonding the display 71 and the window 72 to each other and a process of bonding the second member 75b between the display 71 and the bracket 74 in the step of bonding the display 71 and the window 72 to the bracket 74 after the display 71 and the window are bonded to each other may be added.

According to various embodiments, after the window, the display, and the bracket are bonded to each other, the display may be coupled to (e.g., seated in) the housing while covering a non-display region.

According to various embodiments, an electronic device may include: a display extending from a first direction to a second direction with respect to the electronic device and having a non-display region formed at an end of the display in the second direction; a window extending from the first direction to the second direction so as to cover at least a portion of the display; and a housing joined with the window so as to form at least a portion of an outer face of the electronic device corresponding to the second direction together with the window and to cover the entire non-display region in the second direction.

In the electronic device according to various embodiments, the non-display region may be disposed outside the end of the window, and the non-display region may not be covered by the window in the second direction.

According to various embodiments, the electronic device may further include a bracket extending from the first direction to the second direction and disposed on a second face of the display that is a side opposite the first face of the display where the window is located.

According to various embodiments, the electronic device may further include a member located between the display and the bracket, and at least a partial region of the member is not covered by the display in the second direction.

According to various embodiments, the housing may include a region protruding toward a direction where the display is located at a position close to an end of the display.

According to various embodiments, the electronic device may further include a member located between the display and the window and bonded to at least a partial region of the bracket corresponding to the second direction.

According to various embodiments, the electronic device may further include another member located between the display and the window and bonded to at least a partial region of the member corresponding to the second direction.

According to various embodiments, the electronic device may further include a member, and the housing may be joined to the window through the member.

According to various embodiments, the electronic device may further include: a bracket on which the display is located; and a fastening unit configured to connect the bracket and the member to each other.

In the electronic device according to various embodiments, the window may cover at least a portion of the non-display region, and the housing may cover a partial region of the window, which corresponds to the non-display region.

In the electronic device according to various embodiments, the window may include a first region corresponding to the first direction and a second region corresponding to the second direction, and a first thickness of the first region may be smaller than a second thickness of the second region.

In the electronic device according to various embodiments, the display may be curved with a first curvature from the first direction to extend in the second direction, and the window may be curved with a second curvature from the first direction to extend in the second direction.

In the electronic device according to various embodiments, the first curvature and the second curvature may be the same.

In the electronic device according to various embodiments, the window may include a first region corresponding to the first direction and a second region corresponding to the second direction, and a first distance from the first region to the display may be smaller than a second distance from the second region to the display.

According to various embodiments, an electronic device may include: a display extending from a first direction to a second direction with respect to the electronic device and having a display region and a non-display region; a window extending from the first direction to the second direction so as to cover at least a portion of the display region; and a housing joined with the window so as to form at least a portion of an outer face of the electronic device corresponding to the second direction together with the window and to cover the entire non-display region in the second direction.

In the electronic device according to various embodiments, the electronic device may further include: a bracket extending from the first direction to the second direction and formed on a second face of the display, which is a side opposite the first face of the display where the window is located; and a member located between the display and the bracket, and at least a partial region of the member is not covered by the display in the second direction.

In the electronic device according to various embodiments, the display may be curved from the first direction with a first curvature to extend in the second direction, and the window may be curved from the first direction with a second curvature, which is the same as or different from the first curvature, to extend in the second direction.

The electronic device according to various embodiments may further include: a member configured to join the housing and the window to each other; a bracket on which the display is located; and a fastening unit configured to connect the bracket and the member to each other.

The electronic device according to various embodiments may further include: a member located between the display and the window, configured to support at least one face of the display, and bonded to at least a partial region of the bracket corresponding to the second direction.

According to various embodiments, the electronic device may further include another member located between the display and the window and bonded to at least a partial region of the member corresponding to the second direction.

According to various embodiments, an electronic device may include: a display curved from a first direction with respect to the electronic device to extend in a second direction with respect to the electronic device, and having a non-display region formed at an end of the display in the second direction; a window curved from the first direction to extend in the second direction so as to cover at least a portion of the display; and a housing joined with the window so as to form at least a portion of an outer face corresponding to the second direction together with a side of the window and to cover the entire non-display region in the second direction.

The embodiments of the present disclosure described in the specification and shown in the drawings are merely specific examples presented in order to easily describe the technical details of the present disclosure and to help the understanding of the details, and are not intended to limit the scope of the present disclosure. Therefore, it should be construed that, in addition to the embodiments disclosed herein, all modifications and changes or modified and changed forms derived from the technical idea of various embodiments of the present disclosure fall within the scope of the present disclosure.

**Claims**

**1.** 1. An electronic device comprising:

a display extending from a first direction to a second direction with respect to the electronic device and having a non-display region formed at an end of the display in the second direction; a window extending from the first direction to the second direction so as to cover at least a portion of the display; and a housing joined with the window so as to form at least a portion of an outer face of the electronic device corresponding to the second direction together with the window and to cover the entire non-display region in the second direction.

2. The electronic device of claim 1, wherein the non-display region is disposed outside an end of the window, and the non-display region is not covered by the window in the second direction.

3. The electronic device of claim 1, further comprising:

   a bracket extending from the first direction to the second direction and disposed on a second face of the display, which is a side opposite the first face of the display where the window is located.

4. The electronic device of claim 3, further comprising:

   a member located between the display and the bracket,
   wherein at least a partial region of the member is not covered by the display in the second direction.

5. The electronic device of claim 1, wherein the housing comprises a region protruding in a direction in which the display is located, at a position close to an end of the display.

6. The electronic device of claim 3, further comprising:
   a member located between the display and the window and bonded to at least a partial region of the bracket corresponding to the second direction.

7. The electronic device of claim 6, further comprising:
   another member located between the display and the window and bonded to at least a partial region of the member corresponding to the second direction.

8. The electronic device of claim 1, further comprising:

   a member,
   wherein the housing is joined to the window through the member.

9. The electronic device of claim 8, further comprising:

   a bracket on which the display is located; and
   a fastening unit configured to connect the bracket and the member to each other.

10. The electronic device of claim 1, wherein the window covers at least a portion of the non-display region, and
    the housing covers a partial region of the window, which corresponds to the non-display region.

11. The electronic device of claim 1, wherein the window includes a first region corresponding to the first direction and a second region corresponding to the second direction, and
    a first thickness of the first region is smaller than a second thickness of the second region.

12. The electronic device of claim 1, wherein the display is curved from the first direction with a first curvature to extend in the second direction, and
    the window is curved with a second curvature from the first direction to extend in the second direction.

13. The electronic device of claim 12, wherein the first curvature and the second curvature are the same.

14. The electronic device of claim 12, wherein the window includes a first region corresponding to the first direction and a second region corresponding to the second direction, and
    a first distance from the first region to the display is smaller than a second distance from the second region to the display.

15. An electronic device comprising:

    a display curved from a first direction with respect to the electronic device to extend in a second direction with respect to the electronic device, and having a non-display region formed at an end of the display in the second direction;
    a window curved from the first direction to extend in the second direction so as to cover at least a portion of the display; and
    a housing joined with one side of the window so as to form at least a portion of an outer face corresponding to the second direction together with the window and to cover the entire non-display region in the second direction.

FIG.1

FIG.2

310

370

APPLICATION

| 371 | 372 | 373 | 374 | 375 | 376 | 377 |
|------|-------|---------|-----|---------|--------|-------|
| HOME | DIALER | SMS/MMS | IM | BROWSER | CAMERA | ALARM |

| 378 | 379 | 380 | 381 | 382 | 383 | 384 |
|---------|--------------|--------|----------|-----------------|-------|-------|
| CONTACT | VOICE DIAL | E-MAIL | CALENDAR | MEDIA PLAYER | ALBUM | WATCH |

360

API

330

MIDDLEWARE

| 341 | 342 | 343 | 344 | 335 |
|-------------------------|--------------------|----------------------|---------------------|-----------------|
| APPLICATION MANAGER | WINDOW MANAGER | MULTIMEDIA MANAGER | RESOURCE MANAGER | |
| **345** | **346** | **347** | **348** | RUNTIME LIBRARY |
| POWER MANAGER | DATABASE MANAGER | PACKAGE MANAGER | CONNECTIVITY MANAGER | |
| **349** | **35** | **351** | **352** | |
| NOTIFICATION MANAGER | LOCATION MANAGER | GRAPHIC MANAGER | SECURITY MANAGER | |

320

KERNEL

| 321 | 323 |
|---------------------------|---------------|
| SYSTEM RESOURCE MANAGER | DEVICE DRIVER |

FIG.3

FIG.4A

FIG.4B

FIG.4C

FIG.5A

FIG.5B

FIG.6

FIG.7

FIG.8

FIG.9

40    X1

X2

42a

X3

43a

43

43

z
y
x

43b

# FIG.10

50

52

53

55

51

FIG.11

50

X1+X2

52
51
54

53c

X3

55a

55

55b
55c

53a

56

53

z
y
x

53b

# FIG.12A

X1

X2

X3

55

55a

52

51

54

56

55c

17

z

y

x

53

# FIG.12B

X1

X2

X3

55

55a

56a

52

51

54

17

z

y

x

53

# FIG.12C

FIG.12D

FIG.13

FIG.14

80

81

↓

BONDING DISPLAY AND WINDOW TO EACH OTHER

↓

82
81

↓

BONDING DISPLAY BONDED TO WINDOW TO BRACKET

↓

82
81
84

↓

JOINING WINDOW BONDED TO BRACKET TO HOUSING

↓

82
81
84

83

FIG.15

## INTERNATIONAL SEARCH REPORT

International application No.

**PCT/KR2016/014069**

| A. | CLASSIFICATION OF SUBJECT MATTER |
|---|---|

*G06F 1/16(2006.01)i*

According to International Patent Classification (IPC) or to both national classification and IPC

| B. | FIELDS SEARCHED |
|---|---|

Minimum documentation searched (classification system followed by classification symbols)
G06F 1/16; G09F 9/00; H04B 1/38; G06F 3/041

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: display, window, housing, non-display region, coupling

| C. | DOCUMENTS CONSIDERED TO BE RELEVANT | |
|---|---|---|
| Category* | Citation of document, with indication, where appropriate, of the relevant passages | Relevant to claim No. |
| Y | KR 10-2014-0093360 A (SAMSUNG DISPLAY CO., LTD.) 28 July 2014<br>See paragraphs [0005]-[0010], [0019], [0042], [0071], [0078]; and figures 2, 8-9. | 1-15 |
| Y | KR 10-2014-0002102 A (SAMSUNG DISPLAY CO., LTD.) 08 January 2014<br>See paragraphs [0021]-[0024]; and figures 1-3, 5. | 1-15 |
| A | KR 10-2010-0104635 A (LG ELECTRONICS INC.) 29 September 2010<br>See paragraph [0046]; and figure 4. | 1-15 |
| A | KR 10-2015-0036901 A (LG INNOTEK CO., LTD.) 08 April 2015<br>See paragraph [0019]; and figure 3. | 1-15 |
| A | US 2015-0160699 A1 (SAMSUNG ELECTRONICS CO., LTD.) 11 June 2015<br>See paragraph [0068]; and figure 3. | 1-15 |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 FEBRUARY 2017 (24.02.2017) | **24 FEBRUARY 2017 (24.02.2017)** |

| Name and mailing address of the ISA/KR | Authorized officer |
|---|---|
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/014069**

| Patent document cited in search report | Publication date | Patent family member | Publication date |
|---|---|---|---|
| KR 10-2014-0093360 A | 28/07/2014 | CN 103927938 A | 16/07/2014 |
| | | EP 2755105 A1 | 16/07/2014 |
| | | TW 201440524 A | 16/10/2014 |
| | | US 2014-0198436 A1 | 17/07/2014 |
| | | US 9507192 B2 | 29/11/2016 |
| KR 10-2014-0002102 A | 08/01/2014 | US 2013-0343012 A1 | 26/12/2013 |
| KR 10-2010-0104635 A | 29/09/2010 | KR 10-1561909 B1 | 20/10/2015 |
| KR 10-2015-0036901 A | 08/04/2015 | CN 105874410 A | 17/08/2016 |
| | | KR 10-2015-0035297 A | 06/04/2015 |
| | | US 2016-0216793 A1 | 28/07/2016 |
| | | WO 2015-046756 A1 | 02/04/2015 |
| US 2015-0160699 A1 | 11/06/2015 | KR 10-2015-0065415 A | 15/06/2015 |